# EUROPEAN PATENT SPECIFICATION

(11) **EP 2 284 204 B1**
(45) Date of publication and mention of the grant of the patent: **14.08.2013**
(21) Application number: 09758365.2
(22) Date of filing: 03.06.2009
(51) Int. Cl.: C08F 214/00, C09K 3/18

(54) **COPOLYMER, METHOD FOR PRODUCING THE SAME AND WATER REPELLENT OIL REPELLENT COMPOSITION**
COPOLYMER, VERFAHREN ZU DESSEN HERSTELLUNG SOWIE WASSER- UND ÖLABWEISENDE ZUSAMMENSETZUNG DAMIT
COPOLYMÈRE, SON PROCÉDÉ DE PRODUCTION ET COMPOSITION HYDROFUGE ET OLÉOFUGE

(30) Priority: 04.06.2008 JP 2008147120
(43) Date of publication of application: 16.02.2011
(73) Proprietor: Asahi Glass Company, Limited, Chiyoda-ku Tokyo 100-8405 (JP)
(72) Inventor: SUGIYAMA, Kazunori, Tokyo 100-8405 (JP); SHIMADA, Toyomichi, Tokyo 100-8405 (JP); OTOZAWA, Nobuyuki, Tokyo 100-8405 (JP); OOMORI, Yuuichi, Tokyo 100-8405 (JP); SHIMADA, Minako, Tokyo 100-8405 (JP)
(74) Representative: Müller-Boré & Partner Patentanwälte
(86) International application number: PCT/JP2009/060197
(87) International publication number: WO 2009/148098

(56) References cited:
- EP-A1- 0 898 011
- EP-A1- 1 298 180
- EP-A1- 2 141 213
- EP-A1- 2 166 026
- EP-A1- 2 166 059
- EP-A1- 2 172 530
- EP-A1- 2 264 079
- EP-A1- 2 295 479
- WO-A1-2005/047417
- JP-A- 2005 146 102
- JP-A- 2006 299 016
- US-A1- 2007 088 141

## Description

### TECHNICAL FIELD

The present invention relates to a copolymer, a method for its production and a water/oil repellent composition containing such a copolymer.

### BACKGROUND ART

As a method for imparting water and oil repellency to the surface of an article (such as a fiber product), a method is known which comprises treating the article with a water/oil repellent composition made of an emulsion wherein a copolymer having structural units based on a monomer having a polyfluoroalkyl group (hereinafter a polyfluoroalkyl group will be referred to as an "R^{f} group") having at least 8 carbon atoms, is dispersed in a medium.

However, recently, EPA (United States Environmental Protection Agency) has pointed out that a compound having a perfluoroalkyl group (hereinafter a perfluoroalkyl group will be referred to as an "R^{F} group") having at least 8 carbon atoms is decomposed in an environment or a living body and its decomposition product is accumulated there, thus bringing about a high environmental burden. Accordingly, a copolymer for a water/oil repellent composition having structural units based on a monomer having an R^{f} group having at most 6 carbon atoms and having structural units based on a monomer having an R^{f} group having at least 8 carbon atoms reduced as far as possible is desired.

As a water/oil repellent composition containing such a copolymer, the following water/oil repellent composition has, for example, been proposed.

A water/oil repellent composition containing, as an essential component, a copolymer composed substantially of structural units based on the following monomer (a) and structural units based on the following monomer (b):
Monomer (a): a monomer having an R^{F} group having at most 6 carbon atoms,
. Monomer (b): a (meth)acrylate having an alkyl group having at least 15 carbon atoms,

However, an article treated with such a water/oil repellent composition is inadequate in water repellency against water fallen from a high altitude (rainfall) (hereinafter referred to as dynamic water repellency) and in water repellency after drying without positively heating after washing (hereinafter referred to as water repellency after air drying).

### PRIOR ART DOCUMENT

### PATENT DOCUMENT

Patent Document 1: WO02/083809

### SUMMARY OF THE INVENTION

### OBJECT TO BE ACCOMPLISHED BY THE INVENTION

The present invention is to provide a copolymer which is capable of imparting dynamic water repellency to the surface of an article and at the same time, is excellent in water repellency and oil repellency and which presents little environmental burden; a method for its production; and a water/oil repellent composition.

### MEANS TO ACCOMPLISH THE OBJECT

The copolymer of the present invention is a copolymer comprising structural units of the following monomer (a) and structural units of the following monomer (b), wherein the total of the content of structural units based on the monomer (a) and the content of structural units based on the monomer (b) is at least 85 mass% of all structural units (100 mass%), and the molar ratio ((a)/(b)) of the content of structural units based on the monomer (a) to the content of structural units based on the monomer (b) is from 0.12 to 3:
Momomer (a): a compound represented by the following formula (1):

   (Z-Y)ₙ-X (1)

   wherein Z is a C₁₋₆ polyfluoroalkyl group or a group represented by the following formula (2), Y is a bivalent organic group or a single bond, n is 1 or 2, and when n is 1, X is any one of groups represented by the following formulae (3-1) to (3-5) and when n is 2, X is any one of groups represented by the following formulae (4-1) to (4-4):

   CᵢF₂ᵢ₊₁O(CFX¹CF₂O)ⱼCFX²- (2)

   wherein i is an integer of from 1 to 6, j is an integer of from 0 to 10, and each of X¹ and X² is a fluorine atom or a trifluoromethyl group,

   -CR=CH₂ (3-1)

   -C(O)OCR=CH₂ (3-2)

   -OC(O)CR=CH₂ (3-3)

   -OCH₂-ϕ-CR=CH₂ (3-4)

   -OCH=CH₂ (3-5)

   wherein R is a hydrogen atom, a methyl group or a halogen atom, and ϕ is a phenylene group,

   -CH[-(CH₂)ₘCR=CH₂]- (4-1)

   -CH[-(CH₂)ₘC(O)OCR=CH₂]- (4-2)

   -CH[-(CH₂)ₘOC(O)CR=CH₂]- (4-3)

   -OC(O)CH=CHC(O)O- (4-4)

   wherein R is a hydrogen atom, a methyl group and m is an integer of from 0 to 4,
Monomer (b): vinylidene chloride.
   The copolymer of the present invention is preferably such that the monomer (a) is a compound represented by the formula (1) wherein Z is a C₄₋₆ R^{F} group.
   The copolymer of the present invention preferably further has structural units based on the following monomer (c):
Monomer (c): a monomer having a cross-linkable functional group without having a polyfluoroalkyl group.
   The copolymer of the present invention preferably does not have structural units based on the following monomer (d1):
Monomer (d1): a (meth)acrylate having an alkyl group having at least 18 carbon atoms.
   The copolymer of the present invention is preferably such that based on all monomers (100 mass%), structural units based on the monomer (a) are from 50 to 98.5 mass%, and structural units based on the monomer (b) are from 1 to 40 mass%.
   The method for producing a copolymer of the present invention is a method for producing a copolymer, which comprises polymerizing a monomer mixture comprising the above monomer (a) and the above monomer (b) in a medium in the presence of a surfactant and a polymerization initiator, wherein the total of the content of the monomer (a) and the content of the monomer (b) is at least 85 mass% of the monomer mixture (100 mass%), and in the monomer mixture, the molar ratio ((a)/(b)) of the content of the monomer (a) to the content of the monomer (b) is from 0.12 to 3:

The above monomer mixture preferably further contains the above mentioned monomer (c).

The above monomer mixture preferably does not contain the above-mentioned monomer (d1).

The water/oil repellent composition of the present invention is one comprising the copolymer of the present invention and a medium.

### ADVANTAGEOUS EFFECTS OF THE INVENTION

The copolymer of the present invention is capable of imparting dynamic water repellency to the surface of an article and at the same time, is excellent in water repellency and oil repellency, and it presents little environmental burden.

According to the method for producing a copolymer of the present invention, it is possible to produce a copolymer which is capable of imparting dynamic water repellency to the surface of an article and at the same time, is excellent in water repellency and oil repellency and which presents little environmental burden.

The water/oil repellent composition of the present invention is capable of imparting dynamic water repellency to the surface of an article and at the same time, is excellent in water repellency and oil repellency, and it presents little environmental burden.

### BEST MODE FOR CARRYING OUT THE INVENTION

In this specification, a compound represented by the formula (1) will be referred to as a compound (1). Compounds represented by other formulae will be referred to in the same manner. And, in this specification, a group represented by the formula (2) will be referred to as a group (2). Groups represented by other formulae will be referred to in the same manner. And, a (meth)acrylate in this specification means an acrylate or a methacrylate. And, a monomer in this specification means a compound having a polymerizable unsaturated group. Further, in this specification, an R^{f} group is an alkyl group having some or all of its hydrogen atoms substituted by fluorine atoms, and an R^{F} group is an alkyl group having all of its hydrogen atoms substituted by fluorine atoms.

### <Copolymer>

The copolymer of the present invention has, as essential structural units, structural units based on a monomer (a) and structural units based on a monomer (b) and has, as the case requires, structural units based on a monomer (c) and a monomer (d).

### (Monomer (a))

The monomer (a) is a compound (1).

(Z-Y)ₙX (1)

Z is a C₁₋₆ R^{f} group (provided that the R^{f} group may contain an etheric oxygen atom) or a group (2).

C_{¡}F₂ᵢ₊₁O(CFX¹CF₂O)ⱼCFX²- (2)

wherein i is an integer of from 1 to 6, j is an integer of from 0 to 10, and each of X¹ and X² which are independent of each other, is a fluorine atom or a trifluoromethyl group.

The R^{f} group is preferably an R^{F} group. The R^{f} group may be linear or branched, preferably linear.

Z may be the following groups.
F(CF₂)₄-,
F(CF₂)₅-,
F(CF₂)₆-,
(CF₃)₂CF(CF₂)₂-,
CₖF₂ₖ₊₁O[CF₃)(CF₂O]ₕ-CF(CF₃)-,
wherein k is an integer of from 1 to 6, and h is an integer of from 0 to 10.

Y is an bivalent organic group or a single bond. Here, in the formula (1), the boundary between Z and Y is determined so that the number of carbon atoms in Z becomes smallest. The bivalent organic group is preferably an alkylene group. The alkylene group may be linear or branched. The alkylene group may have -O-, -NH-, -CO-, -S-, -SO₂-, -CD¹=CD²- (wherein each of D¹ and D² which are independent of each other, is a hydrogen atom or a methyl group),

Y may be the following groups.
- CH₂-,
- CH₂CH₂-,
- (CH₂)₃-,
- CH₂CH₂CH(CH₃)-,
- CH=CH-CH₂-,
- S-CH₂CH₂-,
- CH₂CH₂-S-CH₂CH₂-,
- CH₂CH₂-SO₂-CH₂CH₂-,
n is 1 or 2.

When n is 1, X is any one of groups (3-1) to (3-5), and when n is 2, X is any one of groups (4-1) to (4-4).

-CR=CH₂ (3-1)

-C(O)OCR=CH₂ (3-2)

-OC(O)CR=CH₂ (3-3)

-OCH₂-ϕ-CR=CH₂ (3-4)

-OCH=CH₂ (3-5)

wherein R is a hydrogen atom, a methyl group or a halogen atom, and ϕ is a phenylene group.

-CH[-(CH₂)ₘCR=CH₂]- (4-1)

-CH[-(CH₂)ₘC(O)OCR=CH₂]- (4-2)

-CH[-(CH₂)ₘOC(O)CR=CH₂]- (4-3)

-OC(O)CH=CHC(O)O- (4-4)

wherein R is a hydrogen atom, a methyl group, and m is an integer of from 0 to 4.

The compound (1) is preferably a (meth)acrylate having a C₄₋₆ R^{F} group from the viewpoint of the polymerizability with other monomers, the flexibility of a film of the copolymer, the adhesion of the copolymer to an article, the solubility in a medium, the efficiency of emulsion polymerization,

The compound (1) is preferably a compound wherein Z is a C₄₋₆ R^{F} group, Y is a C₁₋₄ alkylene group, n is 1, and X is the group (3-3).

### (Monomer (b))

The monomer (b) is a halogenated olefin. As the copolymer has structural units based on the monomer (b), the strength of a coating film made of the copolymer of the present invention is improved, and the adhesion property of the coating film made of the copolymer of the present invention to a substrate is improved.

The halogenated olefin is vinylidene chloride, . When the interaction with the substrate is taken into consideration, vinylidene chloride is particularly preferred. Especially, it is preferred to combine vinylidene chloride with the monomer (a), whereby the film-forming property will be improved, and it is possible to impart sufficient water and oil repellency to a substrate even by processing at a low temperature. Here, processing at a low temperature means a step of drying the substrate at a temperature of at most 180°C to form a coating film on the substrate.

### (Monomer (c))

The monomer (c) is a monomer having a crosslinkable functional group without having an R^{f} group.

As the copolymer has structural units based on the monomer (c), the durability is further improved.

The crosslinkable functional group is preferably a functional group having at least one bond selected from a covalent bond, an ionic bond and a hydrogen bond, or a functional group capable of forming acrosslinked structure by an interaction with such a bond.

Such a functional group is preferably an isocyanate group, a blocked isocyanate group, an alkoxysilyl group, an amino group, an alkoxymethylamide group, a silanol group, an ammonium group, an amide group, an epoxy group, a hydroxy group, an oxazoline group, a carboxy group, an alkenyl group, a sulfonic acid group particularly preferably a hydroxy group, a blocked isocyanate group, an amino group or an epoxy group.

The monomer (c) is preferably a (meth)acrylate, a (meth)acrylamide, a vinyl ether or a vinyl ester.

The monomer (c) may be the following compounds:
2-isocyanatoethyl (meth)acrylate, 3-isocyanatopropyl (meth)acrylate, 4-isocyanatobutyl (meth)acrylate, a 2-butanone oxime adduct of 2-isocyanatoethyl (meth)acrylate, a pyrazole adduct of 2-isocyanatoethyl (meth)acrylate, a 3,5-dimethylpyrazole adduct of 2-isocyanatoethyl (meth)acrylate, a 3-methylpyrazole adduct of 2-isocyanatoethyl (meth)acrylate, an ε-caprolactam adduct of 2-isocyanatoethyl (meth)acrylate, a 2-butanone oxime adduct of 3-isocyanatopropyl (meth)acrylate, and a pyrazole adduct of 3-isocyanatopropyl (meth)acrylate;
a 3,5-dimethylpyrazole adduct of 3-isocyanatopropyl (meth)acrylate, a 3-methylpyrazole adduct of 3-isocyanatopropyl (meth)acrylate, an ε-caprolactam adduct of 3-isocyanatopropyl (meth)acrylate, a 2-butanone oxime adduct of 4-isocyanatobutyl (meth)acrylate, a pyrazole adduct of 4-isocyanatobutyl (meth)acrylate, a 3,5-dimethylpyrazole adduct of 4-isocyanatobutyl (meth)acrylate, a 3-methylpyrazole adduct of 4-isocyanatobutyl (meth)acrylate, and an ε-caprolactam adduct of 4-isocyanatobutyl (meth)acrylate;
methoxymethyl (meth)acrylamide, ethoxymethyl (meth)acrylamide, butoxymethyl (meth)acrylamide, diacetone acrylamide, γ-methacryloyloxypropyltrimethoxysilane, trimethoxyvinylsilane, vinyltrimethoxysilane, dimethylaminoethyl (meth)acrylate, diethylaminoethyl (meth)acrylate, dimethylaminopropyl (meth)acrylate, (meth)acryloylmorpholine, (meth)acryloyloxyethyltrimethylammonium chloride, (meth)acryloyloxypropyltrimethylammonium chloride, (meth)acrylamideethyltrimethylammonium chloride, and (meth)acrylamidepropyltrimethylammonium chloride;
t-butyl(meth)acrylamide sulfonic acid, (meth)acrylamide, N-methyl(meth)acrylamide, N-methylol(meth)acrylamide, N-butoxymethyl(meth)acrylamide, diacetone(meth)acrylamide, glycidyl (meth)acrylate, 2-hydroxyethyl (meth)acrylate, 2-hydroxypropyl (meth)acrylate, 4-hydroxybutyl (meth)acrylate, 3-chloro-2-hydroxypropyl methacrylate, a polyoxyalkylene glycol mono(meth)acrylate, (meth)acrylic acid, 2-(meth)acryloylxyethylsuccinic acid, 2-(meth)acryloylxyhexahydrophthalic acid, 2-(meth)acryloyloxyethyl acid phosphate, allyl (meth)acrylate, 2-vinyl-2-oxazoline, and a polycaprolactone ester of 2-vinyl-4-methyl-(2-vinyloxazoline)hydroxyethyl (meth)acrylate; and
tri(meth)allyl isocyanurate (T(M)AIC, manufactured by Nippon Kasei Chemical Co., Ltd.), triallyl cyanurate (TAC, manufactured by Nippon Kasei Chemical Co., Ltd.), phenylglycidylethylacrylate tolylenediisocyanate (AT-600,manufactured by KYOEISHA CHEMICAL Co., Ltd.), 3-(methylethylketoxime)isocyanatomethyl-3,5,5-trimethylcyclohexyl(2-hydroxyethylmethacrylate)cyanate (TECHCOAT HE-6P, manufactured by Kyoken Kasei), and a polycaprolactone ester of hydroxyethyl (meth)acrylate (PLACCEL FA, FM series, manufactured by DAICEL CHEMICAL INDUSTRIES, LTD.).

Monomer (c) is preferably N-methylol(meth)acrylamide, N-butoxymethyl(meth)acrylamide, 2-hydroxyethyl (meth)acrylate, a 4-hydroxybutyl (meth)acrylate, glycidyl (meth)acrylate, 3-chloro-2-hydroxypropyl methacrylate, or a polycaprolactone ester of hydroxyethyl (meth)acrylate (PLACCEL FA, FM series, manufactured by DAICEL CHEMICAL INDUSTRIES, LTD.).

### Monomer (d):

The monomer (d) is a monomer other than the monomer (a), the monomer (b) and the monomer (c).

The monomer (d) may be the following compounds:
Methyl (meth)acrylate, ethyl (meth)acrylate, propyl (meth)acrylate, butyl (meth)methacrylate, cyclohexyl (meth)acrylate, 2-ethylhexyl (meth)acrylate, n-hexyl (meth)acrylate, benzyl (meth)acrylate, octyl (meth)acrylate, decyl (meth)acrylate, cyclododecyl acrylate, 3-ethoxypropyl acrylate, methoxy-butyl acrylate, 2-ethylbutyl acrylate, 1,3-dimethylbutyl acrylate, 2-methylpentyl acrylate, lauryl (meth)acrylate, cetyl (meth)acrylate, stearyl (meth)acrylate and behenyl (meth)acrylate;
vinyl acetate, vinyl propionate, butene, isoprene, butadiene, ethylene, propylene, vinyl ethylene, pentene, ethyl-2-propylene, butylethylene, cyclohexylpropylethylene, decylethylene, dodecylethylene, hexene, isohexylethylene, neopentylethylene, (1,2-diethoxycarbonyl)ethylene, (1,2-dipropoxycarbonyl)ethylene, methoxyethylene, ethoxyethylene, butoxyethylene, 2-methoxypropylene, pentyloxyethylene, cyclopentanoyloxyethylene, cyclopentylacetoxyethylene, styrene, α-methylstyrene, p-methylstyrene, hexylstyrene, octylstyrene and nonylstyrene;
N,N-dimethyl(meth)acrylamide, a vinylalkyl ether, an alkyl halide vinyl ether, a vinylalkyl ketone, aziridinylethyl (meth)acrylate, a 2-ethylhexylpolyoxyalkylene (meth)acrylate and a polyoxyalkylene di(meth)acrylate; and
an alkyl crotonate, an alkyl maleate, an alkyl fumarate, an alkyl citraconate, an alkyl mesaconate, triallyl cyanurate, allyl acetate, N-vinylcarbazole, maleimide, N-methylmaleimide, a (meth)acrylate having a silicone in its side chain, a (meth)acrylate having an urethane bond, a (meth)acrylate having a polyoxy alkylene chain with a terminal C₁₋₄ alkyl group, an alkylene di(meth)acrylate,

From the viewpoint of the dynamic water repellency and the durability of water repellency, the copolymer of the present invention contains preferably not more than 15 mass%, more preferably not more than 10 mass%, of structural units based on the following monomer (d1) among monomers (d), and particularly preferably it does not have structural units based on the monomer (d1).

Monomer (d1): a (meth)acrylate having an alkyl group having at least 18 carbon atoms.

The monomer (d1) may, for example, be stearyl (meth)acrylate or behenyl (meth)acrylate.

The proportion of structural units based on the monomer (a) is preferably from 50 to 99 mass%, more preferably from 50 to 98.5 mass%, particularly preferably from 60 to 94 mass%, in all monomers (100 mass%) in view of the dynamic water repellency and the water repellency after air drying.

The proportion of structural units based on the monomer (b) is preferably from 1 to 50 mass%, more preferably from 1 to 40 mass%, particularly preferably from 5 to 30 mass%, in all monomers (100 mass%) from the viewpoint of the dynamic water repellency and the water repellency after air drying.

The total of the content of structural units based on the monomer (a) and the content of structural units based on the monomer (b) is at least 85 mass%, preferably at least 90 mass%, particularly preferably from 95 to 100 mass%, of all structural units (100 mass%). By adjusting such a total to be at least 85 mass%, the copolymer can be provided with both the dynamic water repellency and the water repellency after air drying.

Further, the molar ratio ((a)/(b)) of the content of structural units based on the monomer (a) to the content of structural units based on the monomer (b) is preferably from 0.12 to 3, more preferably from 0.2 to 2.5, particularly preferably from 0.3 to 2. When (a)/(b) is from 0.12 to 3, the adhesion to a substrate is sufficient, and the water and oil repellency is high, and excellent durability can be obtained.

The proportion of structural units based on the monomer (c) is preferably from 0 to 10 mass% in all monomers (100 mass%), and from the viewpoint of the durability, it is more preferably from 0.5 to 10 mass%, particularly preferably from 1 to 10 mass%.

The proportion of structural units based on the monomer (d) is preferably from 0 to 15 mass%, more preferably from 0 to 5 mass%, in all monomers (100 mass%).

The proportions of structural units based on the monomers in the present invention are obtained from the NMR analysis and the elemental analysis. In a case where they cannot be obtained from the NMR analysis and the elemental analysis, they may be calculated on the basis of the amount of monomers charged at the time of the preparation of the copolymer.

### (Method for producing copolymer)

The copolymer of the present invention is produced by the following method.

A method which comprises polymerizing a monomer mixture comprising the monomer (a) and the monomer (b) and, as the case requires, containing the monomer (c) and the monomer (d), in a medium in the presence of a surfactant and a polymerization initiator, to obtain a solution, dispersion or emulsion of a copolymer.

The polymerization method may, for example, be a dispersion polymerization method, an emulsion polymerization method, a suspension polymerization method, , and an emulsion polymerization method is preferred. And, the method may be single-stage polymerization or multistage polymerization.

The method for producing a copolymer of the present invention is preferably a method which comprises emulsion-polymerizing a monomer mixture comprising the monomer (a) and the monomer (b) and, as the case requires, containing the monomer (c) and the monomer (d) in the presence of a surfactant and a polymerization initiator, to obtain an emulsion of a copolymer.

With a view to improving the yield of the copolymer, it is preferred that a mixture comprising the monomers, a surfactant and an aqueous medium is pre-emulsified before the emulsion polymerization. For example, the mixture comprising the monomers, a surfactant and an aqueous medium is mixed and dispersed by a homomixer or a high-pressure emulsification equipment.

The medium may be the after-mentioned medium.

The surfactant may be the after-mentioned surfactant.

The amount of the surfactant to be added is preferably from 1 to 10 parts by mass, per 100 parts by mass of the monomer mixture.

The polymerization initiator may, for example, be a thermal polymerization initiator, an optical polymerization initiator, a radiation polymerization initiator, a radical polymerization initiator or an ionic polymerization initiator, and is preferably a water-soluble or oil-soluble radical polymerization initiator.

As the radical polymerization initiator, a common initiator such as an azo polymerization initiator, a peroxide polymerization initiator, a redox polymerization initiator is used depending upon the polymerization temperature. As the radical polymerization initiator, an azo compound is particularly preferred, and in a case where polymerization is carried out in an aqueous medium, a salt of an azo compound is more preferred. The polymerization temperature is preferably from 20 to 150°C.

The amount of the polymerization initiator to be added, is preferably from 0.1 to 5 parts by mass, more preferably from 0.1 to 3 parts by mass, per 100 parts by mass of the monomer mixture.

At the time of polymerization of the monomer mixture, a molecular weight-controlling agent may be employed. The molecular weight controlling agent is preferably an aromatic compound, a mercapto alcohol or a mercaptan, and an alkyl mercaptan is particularly preferred. The molecular weight-controlling agent may, for example, be mercaptoethanol, n-octyl mercaptan, n-dodecyl mercaptan, t-dodecyl mercaptan, stearyl mercaptan, α-methylstyrene dimer (CH₂=C(Ph)CH₂C(CH₃)₂Ph, wherein Ph is a phenyl group).

The amount of the molecular weight-controlling agent to be added, is preferably from 0.01 to 5 parts by mass, more preferably from 0.1 to 3 parts by mass, per 100 parts by mass of the monomer mixture.

Further, the monomer mixture may be polymerized in the presence of a polyfunctional mercapto compound such as diethylene glycol bis(3-mercaptobutylate), pentaerythritol tetrakis(3-mercaptobutylate), 2,4,6-trimercaptotriazine or 1,3,5-tris(3-mercaptobutyloxyethyl)1,3,5-triazine-2,4,6(1H,3H,5H)-trione.

The proportion of the monomer (a) is preferably from 50 to 99 mass%, more preferably from 50 to 98.5 mass%, particularly preferably from 60 to 94 mass%, in the monomer mixture (100 mass%), from the viewpoint of the dynamic water repellency and the water repellency after air drying.

The proportion of the monomer (b) is preferably from 1 to 50 mass%, more preferably from 1 to 40 mass%, particularly preferably from 5 to 30 mass%, in the monomer mixture (100 mass%), from the viewpoint of the dynamic water repellency and the water repellency after air drying.

The total of the content of the monomer (a) and the content of the monomer (b) is at least 85 mass%, preferably at least 90 mass%, particularly preferably from 95 to 100 mass%, of the monomer mixture (100 mass%). By adjusting the total to be at least 85 mass%, the copolymer can be provided with both the dynamic water repellency and the water repellency after air drying.

Further, the molar ratio ((a)/(b)) of the content of the monomer (a) to the content of the monomer (b) is preferably from 0.12 to 3, more preferably from 0.2 to 2.5, particularly preferably from 0.3 to 2. When (a)/(b) is from 0.12 to 3, the adhesion to a substrate will be adequate, the water and oil repellency will be high, and excellent durability will be obtained.

The proportion of the monomer (c) is preferably from 0 to 10 mass% in the monomer mixture (100 mass%), and from the viewpoint of the durability, it is more preferably from 0.5 to 10 mass%, particularly preferably from 1 to 10 mass%.

The proportion of the monomer (d) is preferably from 0 to 15 mass%, more preferably from 0 to 5 mass%, in the monomer mixture (100 mass%).

The mass average molecular weight (Mw) of the copolymer of the present invention is preferably from 1,000 to 1,000,000, particularly preferably from 3,000 to 1,000,000.

The mass average molecular weight (Mw) of the copolymer is a molecular weight calculated as polystyrene measured by gel permeation chromatography (GPC).

As described above, the copolymer of the present invention comprises structural units based on the monomer (a) and structural units based on the monomer (b), wherein the total of the content of structural units based on the monomer (a) and the content of structural units based on the monomer (b) is at least 85 mass% of all structural units (100 mass%), whereby it is possible to impart sufficient dynamic water repellency and water repellency after air drying to the surface of an article. Further, the environmental burden is low, since it has no structural units based on a monomer having an R^{F} group having at least 8 carbon atoms.

### <Water/oil repellent composition>

The water/oil repellent composition of the present invention comprises, as essential components, the copolymer of the present invention and a medium, and as the case requires, contains a surfactant and additives.

### (Medium)

The medium may, for example, be water, an alcohol, a glycol, a glycol ether, a halogen compound, a hydrocarbon, a ketone, an ester, an ether, a nitrogenous compound, a sulfur compound, an inorganic solvent, or an organic acid. Among them, at least one selected from the group consisting of water, an alcohol, a glycol, a glycol ether and a glycol ester is preferred from the viewpoint of solubility and ease in handling.

The alcohol may, for example, be methanol, ethanol, 1-propanol, 2-propanol, 1-butanol, 2-butanol, 2-methylpropanol, 1,1-dimethylethanol, 1-pentanol, 2-pentanol, 3-pentanol, 2-methyl-1-butanol, 3-methyl-1-butanol, 1,1-dimethylpropanol, 3-methyl-2-butanol, 1,2-dimethylpropanol, 1-hexanol, 2-methyl-1-pentanol, 4-methyl-2-pentanol, 2-ethyl-1-butanol, 1-heptanol, 2-heptanol, or 3-heptanol.

The glycol or the glycol ether may, for example, be ethylene glycol, ethylene glycol monomethyl ether, ethylene glycol monoethyl ether, ethylene glycol monobutyl ether, ethylene glycol monomethyl ether acetate, ethylene glycol monoethyl ether acetate, ethylene glycol monobutyl ether acetate, propylene glycol, propylene glycol monomethyl ether, propylene glycol monoethyl ether, propylene glycol dimethyl ether, dipropylene glycol, dipropylene glycol monomethyl ether, dipropylene glycol dimethyl ether, dipropylene glycol monoethyl ether, tripropylene glycol, tripropylene glycol monomethyl ether, polypropylene glycol, or hexylene glycol.

The halogen compound may, for example, be a halogenated hydrocarbon, or a halogenated ether.

The halogenated hydrocarbon may, for example, be a hydrochlorofluorocarbon, a hydrofluorocarbon, or a hydrobromocarbon.

The halogenated ether may, for example, be a hydrofluoro ether.

The hydrofluoro ether may, for example, be a separated-type hydrofluoro ether or a non-separated-type hydrofluoro ether. The separated-type hydrofluoro ether is a compound wherein an R^{F} or perfluoroalkylene group, and an alkyl or alkylene group, are connected via an etheric oxygen atom. The non-separated-type hydrofluoro ether is a hydrofluoro ether having a partially fluorinated alkyl or alkylene group.

The hydrocarbon may, for example, be an aliphatic hydrocarbon, an alicyclic hydrocarbon, or an aromatic hydrocarbon.

The aliphatic hydrocarbon may, for example, be pentane, 2-methylbutane, 3-methylpentane, hexane, 2,2-dimethylbutane, 2,3-dimethylbutane, heptane, octane, 2,2,4-trimethylpentane, 2,2,3-trimethylhexane, decane, undecane, dodecane, 2,2,4,6,6-pentamethylheptane, tridecane, tetradecane, or hexadecane.

The alicyclic hydrocarbon may, for example, be cyclopentane, methylcyclopentane, cyclohexane, methylcyclohexane, or ethylcyclohexane.

The aromatic hydrocarbon may, for example, be benzene, toluene, or xylene.

The ketone may, for example, be acetone, methyl ethyl ketone, 2-pentanone, 3-pentanone, 2-hexanone, or methyl isobutyl ketone.

The ester may, for example, be methyl acetate, ethyl acetate, butyl acetate, methyl propionate, methyl lactate, ethyl lactate, or pentyl lactate.

The ether may, for example, be diisopropyl ether, dioxane, or tetrahydrofuran.

The nitrogenous compound may, for example, be pyridine, N,N-dimethylformaldehyde, N,N-dimethylacetamide, or N-methylpyrrolidone.

The sulfur compound may, for example, be dimethyl sulfoxide, or sulfolane.

The inorganic solvent may, for example, be liquid carbon dioxide.

The organic acid may, for example, be acetic acid, propionic acid, malic acid, or lactic acid.

One of such media may be used alone, or two or more of the them may be used in combination as a mixture. When two or more of such media are used in combination as a mixture, one of them is preferably water. By using a mixture of media, control of solubility and dispersibility of the copolymer may be easy, and control of permeability and wettability to an article and solvent drying speed at the time of manufacture may be easy.

### (Surfactant)

The surfactant may be a hydrocarbon surfactant or a fluorinated surfactant, and, each of them may, for example, be an anionic surfactant, an nonionic surfactant, a cationic surfactant or an amphoteric surfactant.

From the viewpoint of dispersing stability, the surfactant is preferably a nonionic surfactant, a cationic surfactant, a combination of a nonionic surfactant and a cationic surfactant, or an anionic surfactant alone, more preferably a combination of a nonionic surfactant and a cationic surfactant.

The mass ratio of a nonionic surfactant to a cationic surfactant (a nonionic surfactant / a cationic surfactant) is preferably from 97/3 to 40/60.

In a specific combination of a nonionic surfactant and an cationic surfactant, their total amount in the copolymer (100 mass%) can be adjusted to be at most 5 mass%, whereby an adverse effect to the water repellency of an article can be reduced.

The nonionic surfactant is preferably at least one member selected from the group of surfactants s¹ to s⁶.

### Surfactant s¹:

Surfactant s¹ is a polyoxyalkylene monoalkyl ether, a polyoxyalkylene monoalkenyl ether, a polyoxyalkylene monoalkapolyenyl ether or a polyoxyalkylene monopolyfluoroalkyl ether.

Surfactant s¹ is preferably a polyoxyalkylene monoalkyl ether, a polyoxyalkylene monoalkenyl ether or a polyoxyalkylene monopolyfluoroalkyl ether. As surfactant s¹, one of such surfactants may be used alone, or two or more of them may be used in combination.

An alkyl group, an alkenyl group, an alkapolyenyl group or a polyfluoroalkyl group (hereinafter collectively referred to as an R^{S} group) preferably has from 4 to 26 carbon atoms. The R^{S} group may have a straight chain structure or a branched structure. The branched-structured R^{S} group is preferably a secondary alkyl group, a secondary alkenyl group or a secondary alkapolyenyl group. Some or all of the hydrogen atoms of the R^{S} group may be substituted by fluorine atoms.

Specific examples of the R^{S} group include an octyl group, an dodecyl group, a tetradecyl group, a hexadecyl group, a stearyl group (octadecyl group), a behenyl group (docosyl group), an oleyl group (9-octadecenyl group), a heptadecylfluorooctyl group, a tridecylfluorohexyle group, 1 H,1H,2H,2H-tridecylfluorooctyl group, and a 1 H, 1H,2H,2H-nonafluorohexyl group.

A polyoxyalkylene (hereinafter referred to as POA) chain is preferably a catenated chain consisting of two or more of polyoxyethylene (hereinafter referred to as POE) chains and/or polyoxypropylene (hereinafter referred to as POP) chains. The POA chain may consist of one type of POA chains or two or more types of POA chains. When the POA chain consists of two or more types of POA chains, such POA chains are preferably linked to form blocks.

Surfactant s¹ is more preferably compound (s¹¹):

F¹⁰O[CH₂CH(CH₃)O]ₛ-(CH₂CH₂O)ᵣH (s¹¹)

wherein R¹⁰ is an alkyl group having at least 8 carbon atoms or an alkenyl group having at least 8 carbon atoms, r is an integer of from 5 to 50, and s is an integer of from 0 to 20. Some of hydrogen atoms of the R¹⁰ may be substituted by fluorine atoms.

When r is at least 5, the surfactant is soluble in water and homogeneously soluble in an aqueous medium, thus the water/oil repellent composition has good permeability to an article. When r is at most 50, its hydrophilicity is suppressed and water repellency will be good.

When s is at most 20, the surfactant is soluble in water and homogeneously soluble in an aqueous medium, thus the water/oil repellent composition has good permeability to an article.

When r and s are at least 2, the POE chains and the POP chains are linked to form blocks.

R¹⁰ is preferably a straight chain or a branched chain.

r is preferably an integer of from 10 to 30.

s is preferably an integer of from 0 to 10.

The following compounds may be mentioned as examples of compound (s¹¹), wherein the POE chains and the POP chains are linked in block form:
C₁₈H₃₇O[CH₂CH(CH₃)O]₂-(CH₂CH₂O)₃₀H,
C₁₈H₃₅O-(CH₂CH₂O)₃₀H,
C₁₆H₃₃O[CH₂CH(CH₃)O]₅-(CH₂CH₂O)₂₀H,
C₁₂H₂₅O[CH₂CH(CH₃)O]₂-(CH₂CH₂O)₁₅H,
(C₈H₁₇)(C₆H₁₃)CHO₁₃)(CH₂CH₂O)₁₅H,
C₁₀H₂₁O[CH₂CH(CH₃)O]₂-(CH₂CH₂O)₁₅H,
C₆F₁₃CH₂CH₂O-(CH₂CH₂O)₁₅H,
C₆F₁₃CH₂CH₂O[CH₂CH(CH₃)O]₂-(CH₂CH₂O)₁₅H, and
C₄F₉CH₂CH₂O[CH₂CH(CH₃)O]₂-(CH₂CH₂O)₁₅H.

### Surfactant s²:

Surfactant s² is a nonionic surfactant made of a compound having at least one carbon-carbon triple bond and at least one hydroxy group in the molecule.

Surfactant s² is preferably a nonionic surfactant made of a compound having one carbon-carbon triple bond and one or two hydroxy group(s) in the molecule.

Surfactant s² may have a POA chain in the molecule. The POA chain may, for example, be a POE chain, a POP chain, a chain wherein POE chains and POP chains are linked in a random manner, or a chain wherein POE chains and POP chains are linked in block form.

Surfactant s² is preferably compounds (s²¹) to (s²⁴):
HO-C(R¹¹)(R¹²)-C≡C-C(R¹³)(R¹⁴)-OH (s²¹)
HO-(A¹O)ᵤ-C(R¹¹)(R¹²)-C≡C-C(R¹³)(R¹⁴)-(OA²)ᵥ-OH (s²²)
HO-C(R¹⁵)(R¹⁶)-C≡C-H (s²³)
HO-(A³O)_{w}-C(R¹⁵)(R¹⁶)-C≡C-H (s²⁴)

Each of A¹ to A³ which are independent of one another, is an alkylene group.

Each of u and v is an integer of at least 0, and (u + v) is an integer of at least 1.

w is at least 1.

When each of u, v and w is at least 2, the plurality of each of A¹, A² and A³ may be the same or different, respectively.

A POA chain is preferably a POE chain, a POP chain or a chain containing a POE chain and a POP chain. The number of repeating units of a POA chain is preferably 1 to 50.

Each of R¹¹ to R¹⁶ which are independent of one another, is a hydrogen atom or an alkyl group.

The alkyl group is preferably a C₁₋₁₂ alkyl group, and more preferably a C₁₋₄ alkyl group. The alkyl group may, for example, be a methyl group, an ethyl group, a propyl group, a butyl group, or an isobutyl group.

Compound (s²²) is preferably compound (s²⁵); 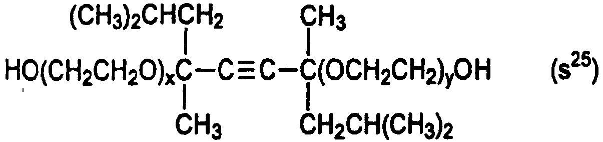 wherein each of x and y is an integer of from 0 to 100.

As compound (s²⁵), one type may be used alone, or two or more types may be used in combination.

Compound (s²⁵) is preferably a compound wherein both x and y are 0, the average of sum of x and y is from 1 to 4, or the average of sum of x and y is from 10 to 30.

### Surfactant s³:

Surfactant s³ is a nonionic surfactant made of a compound wherein a POE chain and a POA chain consisting of two or more consecutively-connected oxyalkylene having at least 3 carbon atoms are catenated, and both two terminals are hydroxy groups.

A polyoxytetramethylene (hereinafter referred to as POT) and/or a POP chain is preferred as such a POA chain.

Surfactant s³ is preferably compound (s³¹) or compound (s³²):
HO(CH₂CH₂O)g₁(C₃H₆O)ₜ₍CH₂CH₂O)_{g2}H (s³¹)
HO(CH₂CH₂O)_{g1}(CH₂CH₂CH₂CH₂O)ₜ(CH₂CH₂CH₂O)_{g2}H (s³²)
g1 is an integer of from 0 to 200.
t is an integer of from 2 to 100.
g2 is an integer of from 0 to 200.

When g1 is 0, g2 is an integer of at least 2. When g2 is 0, g1 is an integer of at least 2.

-C₃H₆O- may be alternatively -CH(CH₃)CH₂O-, -CH₂CH(CH₃)O-, or mixture of -CH(CH₃)CH₂O- and -CH₂CH(CH₃)O-.

The POA chains are in block form.

The following compounds may be mentioned as examples of surfactant s³:
HO-(CH₂CH₂O)₁₅-(C₃H₆O)₃₅-(CH₂CH₂O)₁₅H,
HO-(CH₂CH₂O)₈-(C₃H₆O)₃₅-(CH₂CH₂O)₈H,
HO-(CH₂CH₂O)₄₅-(C₃H₆O)₁₇-(CH₂CH₂O)₄₅H, and
HO-(CH₂CH₂O)₃₄-(CH₂CH₂CH₂CH₂O)₂₈-(CH₂CH₂O)₃₄H.

### Surfactant s⁴:

Surfactant s⁴ is a nonionic surfactant having an amine-oxide portion in the molecule.

Surfactant s⁴ is preferably compound (s⁴¹);

(R¹⁷) (R¹⁸) (R¹⁹)N(→O) (s⁴¹)

wherein each of R¹⁷ to R¹⁹ is a monovalent hydrocarbon group.

A surfactant having an amine oxide (N→O) is regarded as the nonionic surfactant in the present invention.

As compound (s⁴¹), one type may be used alone, or two or more types maybe used in combination.

Compound (s⁴¹) is preferably compound (s⁴²) from the viewpoint of dispersion stability of the copolymer;

(R²⁰)(CH₃)₂N(→O) (s⁴²)

wherein R²⁰ is a C₆₋₂₂ alkyl group, a C₆₋₂₂ alkenyl group, a phenyl group to which a C₆₋₂₂ alkyl group is bonded, a phenyl group to which a C₆₋₂₂ alkenyl group is bonded, or a C₆₋₁₃ fluoroalkyl group. R²⁰ is preferably a C₈₋₂₂ alkyl group, a C₈₋₂₂ alkenyl group or a C₄₋₉ polyfluoroalkyl group.

The following compounds may be mentioned as examples of compound (s⁴²):
[H(CH₂)₁₂](CH₃)₂N(→O),
[H(CH₂)₁₄](CH₃)₂N(→O),
[H(CH₂)₁₆](CH₃)₂N(→O),
[H(CH₂)₁₈](CH₃)₂N(→O),
[F(CF₂)₆(CH₂)₂](CH₃)₂N(→O), and
[F(CF₂)₄(CH₂)₂](CH₃)₂N(→O).

### Surfactant s⁵:

Surfactant s⁵ is a nonionic surfactant made of a polyoxyethylene mono(substituted phenyl) ether condensate or a polyoxyethylene mono(substituted phenyl) ether.

The substituted phenyl group is preferably a phenyl group substituted by a C₇₋₂₄ monovalent hydrocarbon group, more preferably a phenyl group substituted by an alkyl group, an alkenyl group or a styryl group.

Surfactant s⁵ is preferably a polyoxyethylene mono(alkylphenyl) ether condensate, a polyoxyethylene mono(alkenylphenyl) ether condensate, a polyoxyethylene mono(alkylphenyl) ether, a polyoxyethylene mono(alkenylphenyl) ether, or a polyoxyethylene mono[(alkyl)(styryl)phenyl] ether.

The polyoxyethylene mono(substituted phenyl) ether condensate or polyoxyethylene mono(substituted phenyl) ether may, for example, be a formaldehyde condensate of polyoxyethylene mono(nonylphenyl) ether, polyoxyethylene mono(nonylphenyl) ether, polyoxyethylene mono(octylphenyl) ether, polyoxyethylene mono(oleylpheyl) ether, polyoxyethylene [(nonyl)(styryl)phenyl] ether, or polyoxyethylene mono[(oleyl)(styryl)phenyl] ether.

### Surfactant s⁶:

Surfactant s⁶ is a nonionic surfactant made of a fatty acid ester of a polyol.

The polyol represents glycerin, sorbitan, sorbit, polyglycerin, polyethylene glycol, polyoxyethylene glyceryl ether, polyoxyethylene sorbitan ether or polyoxyethylene sorbit ether.

Surfactant s⁶ may, for example, be an ester derived from stearic acid and polyethylene glycol in 1:1 molar ratio, an ester derived from an ether of sorbit and polyethylene glycol, and oleic acid in 1:4 molar ratio, an ester derived from an ether of polyoxyethylene glycol and sorbitan, and stearic acid in 1:1 molar ratio, an ester derived from an ether of polyethylene glycol and sorbitan, and oleic acid in 1:1 molar ratio, an ester derived from dodecanoic acid and sorbitan in 1:1 molar ratio, an ester derived from oleic acid and decaglycerin in 1:1 or 2:1 molar ratio, or an ester derived from stearic acid and decaglycerin in 1:1 or 2:1 molar ratio.

### Surfactant s⁷:

When the surfactant contains a cationic surfactant, surfactant s⁷ is preferred as such a cationic surfactant.

Surfactant s⁷ is a cationic surfactant having a substituted ammonium salt form.

Surfactant s⁷ is preferably an ammonium salt, wherein at least one hydrogen atom connected to the nitrogen atom is substituted by an alkyl group, an alkenyl group or a POA chain having a hydroxy group at the terminal, and is more preferably compound (s⁷¹);

[R²¹)₄N⁺]˙X⁻ (s⁷¹)

wherein R²¹ is a hydrogen atom, a C₁₋₂₂ alkyl group, a C₂₋₂₂ alkenyl group, a C₁₋₉ fluoroalkyl group, or a POA chain having a hydroxy group at the terminal. The four R^{21,}s may be the same or different, however, all of the four R²¹ are not hydrogen atoms at the same time.

R²¹ is preferably a C₆₋₂₂ long-chain alkyl group, a C₆₋₂₂ long-chain alkenyl group, or a C₁₋₉ fluoroalkyl group.

When R²¹ is an alkyl group other than a long-chain alkyl group, the R²¹ is preferably a methyl group or an ethyl group.

When R²¹ is a POA chain having a hydroxy group at the terminal, the POA chain is preferably a POE chain.

X- is a counter ion.

X- is preferably a chloride ion, an ethylsulfate ion or an acetate ion.

Compound (s⁷¹) may, for example, be monostearyltrimethylammonium chloride, monostearyldimethylmonoethylammonium ethylsulfate, mono(stearyl)monomethyldi(polyethylene glycol)ammonium chloride, monofluorohexyltrimethylammonium chloride, di(tallow alkyl)dimethylammonium chloride, or dimethyl mono coconut amine acetate.

### Surfactant s⁸:

When the surfactant contains a zwitterizonic surfactant, surfactant s⁸ is preferred as such a surfactant.

Surfactant s⁸ may, for example, be an alanine, an imidazolinium betaine, an amidebetaine or betaine acetate.

The hydrophobic group in the surfactant s⁸ is preferably a C₆₋₂₂ long-chain alkyl group, a C₆₋₂₂ long-chain alkenyl group, or a C₁₋₉ fluoroalkyl group.

Surfactant s⁸ may, for example, be dodecylbetaine, stearylbetaine, dodecylcarboxymethylhydroxyethyl imidazolinium betaine, dodecydimethylaminoacetate betaine, or a fatty acid amidepropyl dimethylaminoacetate betaine.

### Surfactant s⁹:

Surfactant s⁹ may used as the surfactant.

Surfactant s⁹ is a polymeric surfactant made of a block copolymer, a random copolymer or a hydrophobically modified body of a hydrophilic copolymer, which is derived from a hydrophilic monomer and a hydrophobic hydrocarbon monomer and/or a hydrophobic fluoromonomer.

Surfactant s⁹ may, for example, be a block or random copolymer derived from polyethylene glycol (meth)acrylate and a long-chain alkyl acrylate, a block or random copolymer derived from polyethylene glycol (meth)acrylate and a fluoro (meth)acrylate, a block or random copolymer derived from vinyl acetate and a long-chain alkyl vinyl ether, a block or random copolymer derived from vinyl acetate and a long-chain alkylvinyl ester, a polymer derived from styrene and maleic anhydride, a condensate of polyvinyl alcohol and stearic acid, a condensate of polyvinyl alcohol and stearyl mercaptan, a condensate of polyallylamine and stearic acid, a condensate of polyethyleneimine and stearyl alcohol, methylcellulose, hydroxypropylmethylcellulose, or hydroxyethylmethylcellulose.

Commercial products of surfactant s⁹ include MP Polymer (item code: MP-103, MP-203) manufactured by Kurary Co., Ltd., SMA resins manufactured by Elf Atochem Inc., METOLOSE manufactured by Shin-Etsu Chemical Co., Ltd., EPOMIN RP manufactured by NIPPON SHOKUBAI Co., Ltd., and Surflon (item code: S-381, S-393) manufactured by SEIMI CHEMICAL CO., LTD.

Surfactant s⁹ is preferably surfactant s⁹¹ when the medium is an organic solvent, or the organic content in the solvent is high;

Surfactant s⁹¹: a polymeric surfactant made of a block or random copolymer (its polyfluoroalkyl denatured body) of a lipophilic monomer and a fluoromonomer.

Surfactant s⁹¹ may, for example, be a copolymer derived from an alkyl acrylate and fluoro (meth)acrylate, or a copolymer derived from an alkyl vinyl ether and a fluoroalkyl vinyl ether.

Commercial products of surfactant s⁹¹ include Surflon (item code: S-383, SC-100 series) manufactured by SEIMI CHEMICAL CO., LTD.

From the viewpoint of excellence in water repellency, durability of the water/oil repellent composition and stability of the obtained emulsion, the combination of the surfactants is preferably a combination of surfactant s¹, surfactant s² and surfactant s⁷; a combination of surfactant s¹, surfactant s³ and surfactant s⁷; or a combination of surfactant s¹, surfactant s², surfactant s³ and surfactant s⁷, more preferably such combinations wherein surfactant s⁷ is compound (s⁷¹).

The total amount of the surfactants is preferably from 1 to 6 parts by mass in the copolymer (100 parts by mass).

### (Additives)

The water/oil repellent composition of the present invention may contain various additives as the case requires.

Additives may, for example, be a penetrant, an anti-foaming agent, a water absorbent, an anti-static agent, an anti-crease agent, a softener, a film-forming aid, a water-soluble polymer (polyacrylamide, polyvinyl alcohol, .), a thermosetting agent (melamine resin, urethane resin, ), an epoxy curing agent (isophthalic acid hydrazide, adipic acid dihydrazide, sebacic acid dihydrazide, dodecanedioic acid dihydrazide, 1,6-hexamethylene bis(N,N-dimethylsemicarbazide), 1,1,1',1'-tetramethyl-4,4'-(methylene-di-p-phenylene)disemicarbazide, spiroglycol, .), a thermosetting catalyst, a cross-linking catalyst, a synthetic resin, a fiber stabilizer, fine inorganic particles.

. The water/oil repellent composition of the present invention preferably contains a thermosetting agent and a thermosetting catalyst, since the durability is thereby improved.

Further, the water/oil repellent composition of the present invention maycontain a copolymer having water and/or oil repellency other than the copolymer of the present invention (e.g. a copolymer containing many structural units based on the monomer (c), a commercial water repellent agent, a commercial oil repellent agent or a commercial water/oil repellent agent), a water repellent compound having no fluorine atom, as the case requires. Such a water repellent compound having no fluorine atom may, for example, be a paraffin compound, an aliphatic amide compound, an alkylethylene urea compound or a silicon compound.

### (Method for producing water/oil repellent composition)

The water/oil repellent composition of the present invention is produced by the following method (i) or (ii).
(i) A method which comprises polymerizing a monomer mixture comprising the monomer (a) and the monomer (b) and, as the case requires, containing the monomer (c) and the monomer (d), in a medium in the presence of a surfactant and a polymerization initiator, to obtain a solution, dispersion or emulsion of a copolymer, and as a case requires, adding other media, other surfactants or additives.
(ii) A method which comprises polymerizing a monomer mixture comprising the monomer (a) and the monomer (b) and, as the case requires, containing the monomer (c) and the monomer (d), in a medium in the presence of a surfactant and a polymerization initiator, to obtain a solution, dispersion or emulsion of a copolymer, then separating the copolymer, and adding to the copolymer, a medium, a surfactant and an optional additive.

The polymerization of the monomer mixture may be carried out in the same manner as the polymerization in the above described method for producing a copolymer.

Regarding the water/oil repellent composition of the present invention, the copolymer is preferably dispersed in the form of particles in the medium. The average particle size of the copolymer is preferably from 10 to 1,000 nm, more preferably from 10 to 300 nm, particularly preferably from 10 to 250 nm. When the average particle size is within such a range, a surfactant, a dispersant, are not required in large amounts, water/oil repellency is good, dyed fabrics can be treated without color dulling, and the particles are stably-dispersed without precipitation in the medium. The average particle size of the copolymer is measured by a dynamic light scattering device, an electron microscope,

The solid content concentration of the emulsion is preferably from 20 to 40 mass% in the emulsion (100 mass%) immediately after the production of the copolymer. Here, the solid content concentration is the concentration including not only the copolymer but also an emulsifying agent. The content of the copolymer in the emulsion is preferably from 18 to 40 mass% immediately after the production of the copolymer.

The solid content concentration of the water/oil repellent composition is preferably from 0.2 to 5 mass% in the water/oil repellent composition (100 mass%) at the time of treating articles.

The solid content concentration of the emulsion or the water/oil repellent composition is calculated from the mass of the emulsion or the water/oil repellent composition before heating and the mass of it after drying in the convection-drying machine at the temperature of 120°C for 4 hours.

The above described water/oil repellent composition of the present invention contains the copolymer of the present invention, whereby it is possible to impart sufficient dynamic water repellency and water repellency after air drying to the surface of an article. Further, the copolymer does not have structural units based on a monomer having an R^{F} group having at least 8 carbon atoms, whereby it presents little environmental burden.

In addition, regarding the water/oil repellent composition of the present invention, the content (the content when the solid content concentration is 20%) of perfluorooctanoic acid (PFOA), perfluorooctane sulfonate (PFOS), their precursors and their analogues, environmental impact of which is pointed out, can be reduced to a level lower than the detection limit of analysis value of LC-MS/MS in the method disclosed in Japanese Patent Application No. 2007-333564.

The water/oil repellent composition of the present invention may be used alone, or as mixed with another water/oil repellent composition. For example, it is used as combined with a fluorinated soil release agent which has much hydrophilic component and little water repellent property, whereby wash-durable water/oil repellent soil-release finishing is possible.

### <Article>

The water/oil repellent composition of the present invention is used for water/oil repellent treatment of an article.

The article to be treated with the water/oil repellent composition of the present invention may, for example, be fibers (natural fibers, synthetic fibers, blended fibers, ), various fiber products, nonwoven fabrics, resins, paper, leather, metal, stone, concrete, plaster, or glass.

An example of a method for treating the article is to coat or dip the article with the water/oil repellent composition by a publicly-known coating method and then to dry it.

Additionally, such an article may be finished to be antistatic, softening, antibacterial, deodorant or waterproof.

An example of water proofing may be to form a water proof membrane. The water proof membrane may, for example, be a porous membrane obtained from a urethane resin or an acryl resin, a nonporous membrane obtained from a urethane resin or an acryl resin, a polytetrafluoroethylene membrane or a moisture-permeable water proof membrane which is a combination of the above membranes.

When an article is treated with the water/oil repellent composition of the present invention, it is possible to impart water/oil repellency of high quality to the article. Further, it is possible to impart the water/oil repellency even by curing at a low temperature, with excellent adhesion to the substrate surface. Further, the initial performance of the treatment can stably be maintained with little deterioration of the performance by abrasion or washing. Further, when paper is treated, even under a low temperature drying condition, excellent size property and water/oil repellency can be imparted to the paper. When a resin, glass or metal surface is, for example, treated, it is possible to form a water/oil repellent coating film which is excellent in the film-forming property and exhibits good adhesion to the article.

### EXAMPLES

Examples 1 to 11 and 20 to 22 are working examples of the present invention, and Examples 12 to 19 are comparative examples.

### <Physical properties of copolymer>

With respect to a copolymer recovered by the following recovering method A, measurement of the molecular weight and analysis of the copolymer composition were carried out.

### (Copolymer recovery method A)

6 g of an emulsion was concentrated so that the solid content became about 40 mass% to obtain a concentrated liquid. To this concentrated liquid, about 10 g of tetrahydrofuran (hereinafter referred to as THF) was dropwise added to dissolve the solid in the concentrated liquid thereby to obtain a THF solution. In a case where the solid was hardly dissolved, ultrasonic waves were applied. To 60 g of methanol, the THF solution was dropwise added, followed by stirring to precipitate a solid. The obtained solid was recovered by filtration under reduced pressure. It was vacuum-dried overnight at 35°C to obtain a copolymer.

### (Copolymer composition)

For the analysis of the copolymer composition of the recovered copolymer, ¹⁹F-NMR, ¹³C-NMR, pyrolysis GC/MS, and automatic sample combustion device-ion chromatography were used.

From the ¹⁹F-NMR analysis, information relating to the chain length of structural units based on the monomer (a) is obtainable. Further, from the ¹³C-NMR, information relating to structural units based on a hydrocarbon monomer is obtainable. Further, a peak of structural units based on the monomer (d1) is observed in the vicinity of from 10 to 35 ppm. Peaks of structural units based on vinyl chloride are observed in the vicinity of 45 ppm and 56 ppm. A peak of structural units based on vinylidene chloride is observed in the vicinity of from 80 to 90 ppm. A peak of structural units based on the monomer (a) is observed in the vicinity of from 105 to 120 ppm.

From the GC/MS analysis, it is possible to know the detailed structures of structural units based on the monomers contained in the copolymer.

In the automatic combustion device-ion chromatography analysis, the amounts of F and Cl in the copolymer were quantified. From the amount of F, the proportion of structural units based on the monomer (a) can be calculated. Further, from the amount of Cl, the proportion of structural units based on the monomer (b) can be calculated.

The conditions for the respective analyses are as follows.

### (NMR)

Apparatus: ECP 400, manufactured by JEOL Ltd.

Sample: 5 mass% copolymer CDCl₃ solution

¹⁹F-NMR external standard: 1,1,2-trichloro-1,2,2-trifluoroethane

Temperature for measurement: room temperature

### (Automatic combustion device-ion chromatography (AQF-IC method))

### (Automatic sample combustion device)

Apparatus: automatic sample combustion device AQF-100, manufactured by Dia Instruments Co., Ltd.

Combustion condition: mode for solid sample

Amount of sample: from 2 to 20 mg

### (Ion chromatography)

Apparatus: manufactured by Dionex Corporation

Column: lonpacAG12A+lonpacAS12A

Eluent: 2.7 mM-Na₂CO₃/0.3 mM-NaHCO₃

Flow rate: 1.3 mL/min

Suppressor: ASRS

Detector: electric conductivity detector

Injected amount: 5 µL

### (Molecular weight)

Measurement of the molecular weight of the recovered copolymer was carried out by GPC measuring method A or GPC measuring method B.

### (GPC measuring method A)

The recovered copolymer was made into a 0.5 mass% THF solution, which was passed through a 0.45 µm filter to obtain a sample for analysis. With respect to such a sample, the mass average molecular weight (Mw) was measured. The conditions for the measurement are as follows.

Apparatus: HLC-8220GPC, manufactured by TOSOH CORPORATION

Column: four types of TSKgel superHZ4000, superHZ3000, superHZ2500 and superHZ2000 are connected in series.

Temperature for measurement: 40°C

Injected amount: 40 µL

Flow rate: 0.35 mUmin

Eluent: THF

Standard sample: EasiCal PS-2, manufactured by Polymer laboratories

### (GPC measuring method B)

The recovered copolymer was dissolved in a solvent mixture of fluorinated solvent (AK-225, manufactured by Asahi Glass Company, Limited)/THF = 6/4 (volume ratio) to obtain a 1 mass% solution, which was passed through a 0.2 µm filter to obtain a sample for analysis. With respect to such a sample, the number average molecular weight (Mn) and the mass average molecular weight (Mw) were measured. The conditions for measurement are as follows.

Apparatus: HLC-8220GPC, manufactured by TOSOH CORPORATION

Column: MIXED-C and 100A, manufactured by Polymer laboratories, are connected in series.

Temperature for measurement: 37°C

Injected amount: 50 µL

Flow rate: 1 mL/min

Standard sample: EasiCal PM-2, manufactured by Polymer laboratories

Eluent: solvent mixture of fluorinated solvent (AK-225, manufactured by Asahi Glass Company, Limited)/THF =6/4 (volume ratio)

### <Evaluation of test cloth>

### (Oil repellency)

With respect to a test cloth, the oil repellency (OR) was evaluated in accordance with the test method of AATCC-TM118-1966. The oil repellency was represented by grades as shown in Table 1. The grade followed by + (-) means that the property is slightly better (worse).

**TABLE 1**

| Oil repellency No. | Test liquid | Surface tension |
|---|---|---|
| | | mN/m (25°C) |
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | 65 Parts of Nujol / 35 parts of hexadecane | 29.6 |
| 1 | Nujol | 31.2 |
| 0 | Less than 1 | -- |

### (Washing durability)

With respect to a test cloth, washing was repeated 20 times in accordance with the water-washing method of JIS L0217 Attached Table 103. After the washing, air drying was carried out overnight in a room at a room temperature of 25°C under a relative humidity of 60%, whereupon the above oil repellency was evaluated.

### (Water repellency)

With respect to a test cloth, water repellency (WR) was evaluated in accordance with the spray test of JIS L1092-1992. The water repellency was represented by 5 grades of from 1 to 5. The higher the grade, the better the water repellency. One with grade 3 or higher is regarded as exhibiting water repellency. A grade followed by + (-) means that the property is slightly better (worse) as compared with the standard level of that grade.

### (Washing durability)

With respect to a test cloth, washing was repeated 20 times or 50 times in accordance with the water-washing method of JIS L0217 Attached Table 103. After the washing, air drying was carried out overnight in a room at a room temperature of 25°C under a relative humidity of 60%, whereupon the above water repellency was evaluated.

### (Dynamic water repellency)

With respect to a test cloth, rainfall was simulated in accordance with the method disclosed in JIS L1092, method (C) (Bundesmann Method) under such conditions that the amount of rainfall was 100 cc/min, the temperature of rainwater was 20°C and the raining time was 10 minutes, whereby the water repellency was evaluated. The water repellency was represented by 10 grades of from 1 to 5. The higher the grade, the better the water repellency. One with grade 3 or higher is regarded as exhibiting water repellency. A grade followed by + (-) means that the property is slightly better (worse).

### (Washing durability)

With respect to a test cloth, washing was repeated 5 times in accordance with a water washing method of JIS L0217 Attached Table 103. After the washing, air drying was carried out overnight in a room at a room temperature of 25°C under a relative humidity of 50%, whereupon the above dynamic water repellency was evaluated.

### (Abbreviations)

### CmFA:

F(CF₂)ₘCH₂CH₂OC(O)CH=CH₂ (a mixture of ones having m being from 6 to 16, wherein ones having m being at least 8 are at least 99 mass%, and an average value of m is 9).

### Monomer (a):

C6FMA: C₆F₁₃C₂H₄OC(O)C(CH₃)=CH₂

### Monomer (b):

VCM: vinyl chloride

VdCl: vinylidene chloride

### Monomer (c):

D-BI: 3,5-dimethylpyrazole adduct of 2-isocyanateethyl methacrylate (the following formula (5))

NMAM: N-methylol acrylamide

HEMA: 2-hydroxyethyl methacrylate

NBM: N-butoxymethyl acrylamide

4HBA: 4-hydroxybutyl acrylate

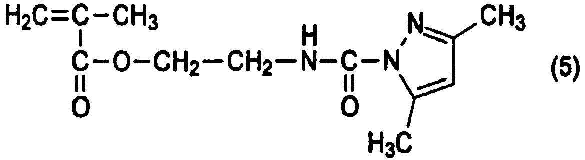

### Monomer (d):

DOM: dioctyl maleate

### Monomer (d1):

STA: stearyl acrylate

BeA: behenyl acrylate

### Molecular weight-controlling agent:

nDOSH: n-dodecyl mercaptan

### Surfactant s¹:

PEO-20: an aqueous solution containing 10 mass% of polyoxyethylene oleyl ether (EMULGEN E430, ethylene oxide about 26 mol adduct, manufactured by Kao Corporation)

SFY465: an aqueous solution containing 10 mass% of 2,4,7,9-tetramethyl-5-decyne-4,7-diol ethylene oxide adduct (SURFYNOL 465, ethylene oxide 10 mol adduct, manufactured by NISSIN CHEMICAL INDUSTRY CO., LTD.)

BL-21: polyoxyethylene(21) lauryl ether (manufactured by Nikko Chemicals Co., Ltd.)

### Surfactant s⁷:

TMAC: an aqueous solution containing 10 mass% of trimethylammonium chloride (Arquad 18-63, manufactured by LION K.K.)

AM301: an aqueous solution of betaine lauryldimethyl aminoacetate (manufactured by Nikko Chemicals Co., Ltd.)

### Surfactant s³:

P204: an aqueous solution containing 10 mass% of ethylene oxide propylene oxide polymer (PLONON 204, proportion of ethylene oxide: 40 mass%, manufactured by NOF CORPORATION)

### Polymerization initiator:

VA061A: an aqueous solution containing 10 mass% of an acetate of 2,2'-azobis[2-(2-imidazolin-2-yl)propane] (VA-061, manufactured by Wako Pure Chemical Industries, Ltd.)

V50: 2,2-azobis(2-methylpropioneamidine) dihydrochloride (manufactured by Wako Pure Chemical Industries, Ltd.)

### Medium:

DPG: dipropylene glycol

Water: deionized water

### EXAMPLE 1

248.3 g of C6FMA, 2.8 g of HEMA, 2.8 g of nDOSH, 69.0 g of PEO-20, 13.8 g of TMAC, 13.8 g of P204, 82.8 g of DPG and 328.3 g of water were put in a glass beaker, heated at 55°C for 30 minutes and then mixed by a homomixer (BIO MIXER, manufactured by NIHONSEIKI KAISHA LTD.) to obtain a mixed liquid.

While maintained at 50°C, the obtained mixed liquid was treated by a high pressure emulsifier (Mini-Lab, manufactured by APV RANNIE) under 40 MPa to obtain an emulsion. The obtained emulsion was put into a glass reactor and cooled to at most 30°C. 24.8 g of VdCl and 13.8 g of VA061A were added thereto, and after replacing the gas phase with nitrogen, a polymerization reaction was carried out at 65°C for 15 hours with stirring to obtain an emulsion of a copolymer.

The proportions of the respective monomers in the monomer mixture are shown in Table 3. Further, the recovery method for the copolymer, the copolymer composition and the molecular weight of the copolymer are shown in Table 4. AA in the Table is a value representing 100 - [the proportion (calculated value) of structural units based on the monomer (a) + the proportion (calculated value) of structural units based on the monomer (b)]. The analyzed values of the copolymer composition generally agree with the calculated values from the charged amounts. This indicates that the copolymer contains structural units corresponding to the charged amounts of the monomers.

### EXAMPLES 2 to 10, 13 to 15, 18 and 20 to 22

An emulsion of a copolymer was obtained in the same manner as in Example 1 except that the charged amounts of the respective materials were changed to the amounts shown in Table 2.

The proportions of the respective monomers in the monomer mixture are shown in Table 3. Further, with respect to some Examples, measurement of the molecular weight of the copolymer and analysis of the copolymer composition were carried out. The recovery method for the copolymer, the copolymer composition and the molecular weight of the copolymer are shown in Table 4. The analytical values of the copolymer composition generally agree with the calculated values from the charged amounts. This indicates that the copolymer contains structural units corresponding to the charged amounts of the monomers.

### EXAMPLE 11

240.0 g of C6FMA, 8.3 g of D-BI, 2.8 g of HEMA, 2.8 g of nDOSH, 69.0 g of PEO-20, 13.8 g of TMAC, 13.8 g of P204, 82.8 g of DPG and 328.3 g of water were put into a glass beaker, heated at 60°C for 30 minutes and then mixed by a homomixer (BIO MIXER, manufactured by NIHONSEIKI KAISHA LTD.) to obtain a mixed liquid.

While maintained at 60°C, the obtained mixed liquid was treated by a high pressure emulsifier (Mini-Lab, manufactured by APV RANNIE) under 40 MPa to obtain an emulsion. The obtained emulsion was put into a stainless steel reactor and cooled to at most 40°C. 13.8 g of VA061A was added, and the gas phase was replaced with nitrogen, then, 24.8 g of VCM was introduced, and a polymerization reaction was carried out at 60°C for 15 hours with stirring, to obtain an emulsion of a copolymer.

The proportions of the respective monomers in the monomer mixture are shown in Table 3.

### EXAMPLES 12, 16, 17 and 19

An emulsion of a copolymer was obtained in the same manner as in Example 1 except that the charged amounts of the respective materials were changed to the amounts shown in Table 2.

The proportions of the respective monomers in the monomer mixture are shown in Table 3. Further, with respect to some Examples, measurement of the molecular weight of the copolymer was carried out. The molecular weight of the copolymer is shown in Table 4.

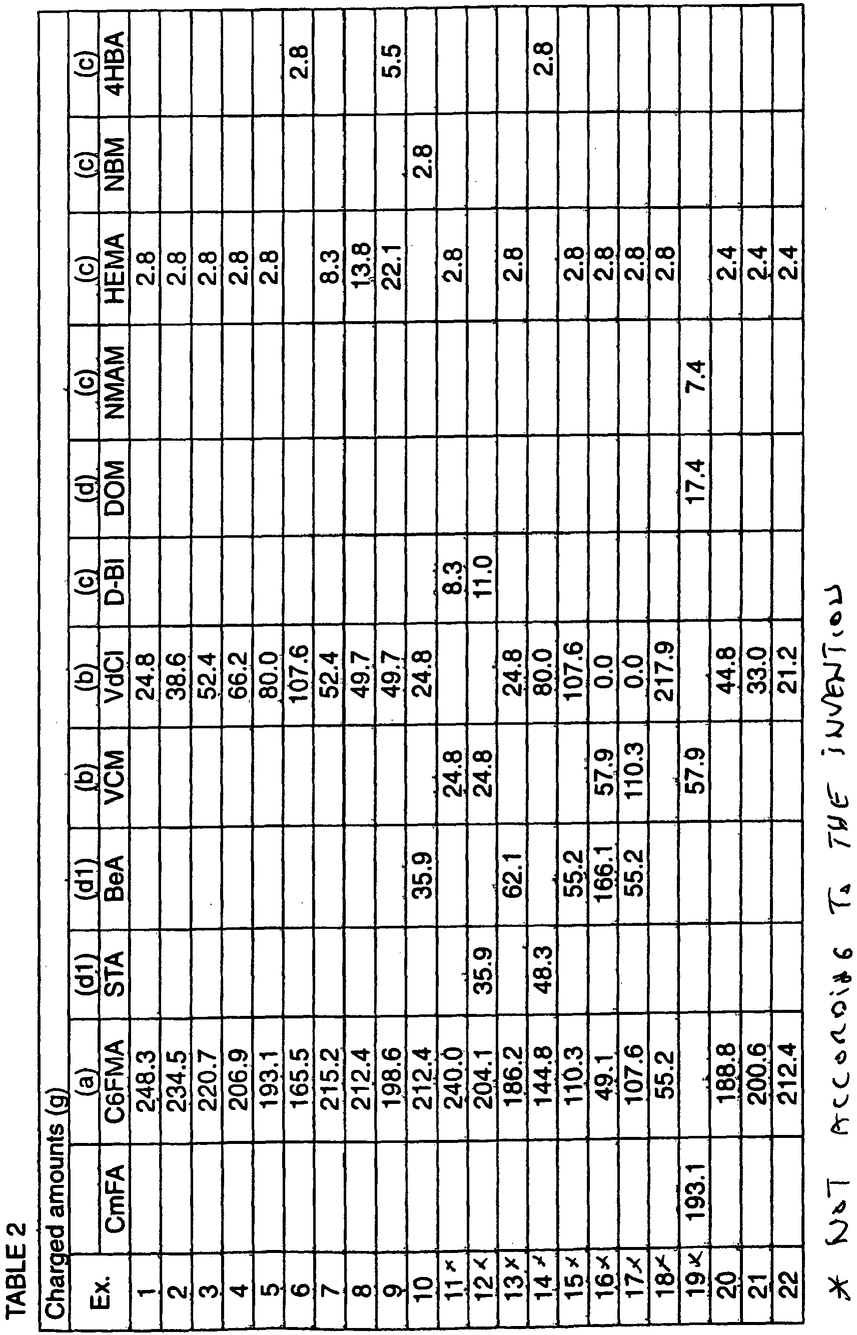

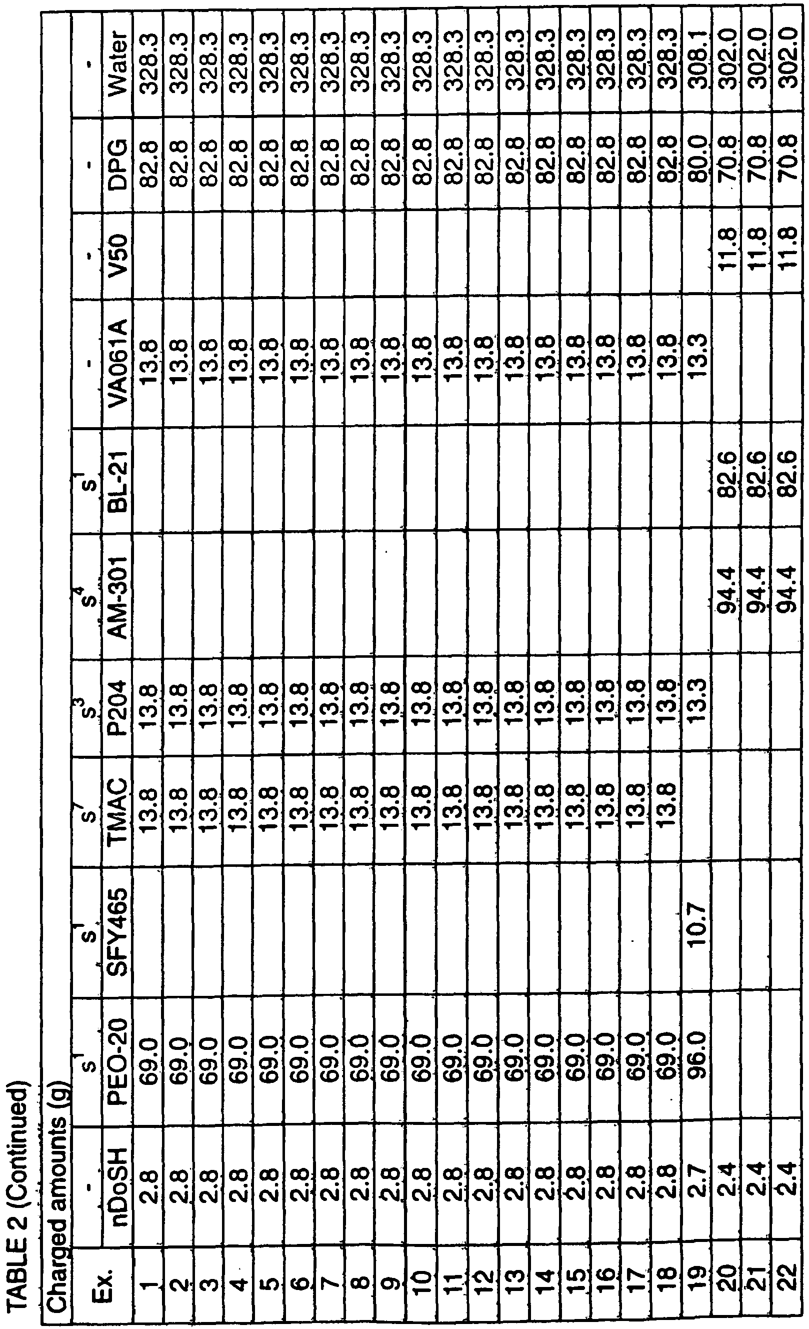

**TABLE 3**

| Proportions (mass%) of the respective monomers in the monomer mixture (100 mass%) | | | | | | | | | | | | | (a)+(b) | Molar ratio (a)/(b) |
|---|---|---|---|---|---|---|---|---|---|---|---|---|---|---|
| Ex. | | (a) | (d1) | (d1) | (b) | (b) | (c) | (d) | (c) | (c) | (c) | (c) | | |
| | CmFA | C6FMA | STA | BeA | VCM | VdCl | D-Bl | DOM | NMAM | HEMA | NBM | 4HBA | | |
| 1 | | 90 | | | | 9 | | | | 1 | | | 99.0 | 2.2 |
| 2 | | 85 | | | | 14 | | | | 1 | | | 99.0 | 1.3 |
| 3 | | 80 | | | | 19 | | | | 1 | | | 99.0 | 0.9 |
| 4 | | 75 | | | | 24 | | | | 1 | | | 99.0 | 0.7 |
| 5 | | 70 | | | | 29 | | | | 1 | | | 99.0 | 0.5 |
| 6 | | 60 | | | | 39 | | | | | | 1 | 99.0 | 0.3 |
| 7 | | 78 | | | | 19 | | | | 3 | | | 97.0 | 0.9 |
| 8 | | 77 | | | | 18 | | | | 5 | | | 95.0 | 1.0 |
| 9 | | 72 | | | | 18 | | | | 8 | | 2 | 90.0 | 0.9 |
| 10 | | 77 | | 13 | | 9 | | | | | 1 | | 86.0 | 1.9 |
| 11* | | 87 | | | 9 | | 3 | | | 1 | | | 96.0 | 1.4 |
| 12* | | 74 | 13 | | 9 | | 4 | | | | | | 83.0 | 1.2 |
| 13 | | 67.5 | | 22.5 | | 9 | | | | 1 | | | 76.5 | 1.7 |
| 14 | | 52.5 | 17.5 | | | 29 | | | | | | 1 | 81.5 | 0.4 |
| 15 | | 40 | | 20 | | 39 | | | | 1 | | | 79.0 | 0.2 |
| 16* | | 17.8 | | 60.2 | 21 | | | | | 1 | | | 38.8 | 0.1 |
| 17* | | 39 | | 20 | 40 | | | | | 1 | | | 79.0 | 0.1 |
| 18 | | 20 | | | | 79 | | | | 1 | | | 99.0 | 0.1 |
| 19* | 70 | | | | 21 | | | 6.3 | 2.7 | | | | 21.0 | 0.0 |
| 20 | | 80 | | | | 19 | | | | 1 | | | 99.0 | 0.9 |
| 21 | | 85 | | | | 14 | | | | 1 | | | 99.0 | 1.3 |
| 22 | | 90 | | | | 9 | | | | 1 | | | 99.0 | 2.2 |

| | | | | | | | | | | | | | | |
|---|---|---|---|---|---|---|---|---|---|---|---|---|---|---|
| *not according to the invention | | | | | | | | | | | | | | |

**TABLE 4**

| Ex. | Recovery method for copolymer | Copolymer composition (mass%) | | | | | | Molecular weight | | | |
|---|---|---|---|---|---|---|---|---|---|---|---|
| | | Calculated from charged amounts *1 | | | Analytical results | | | GPC method | Mn | Mw | Mw/Mn |
| | | (a) | AA | (b) | (a) | AA | (b) | | | | |
| 1 | A | 89 | 2 | 9 | 89.2 | 3.5 | 7.3 | B | 24091 | 34498 | 1.4 |
| 3 | A | 79 | 2 | 19 | 81 | 3 | 16 | B | 24219 | 34382 | 1.4 |
| 5 | A | 69 | 2 | 29 | 72 | 1 | 27 | A | 10857 | 25315 | 2.3 |
| 7 | A | - | - | - | - | - | - | A | 11690 | 26799 | 2.3 |
| 9 | A | - | - | - | - | - | - | B | 22647 | 32673 | 1.4 |
| 19 | A | - | - | - | - | - | - | B | 23100 | 32334 | 1.4 |

| | | | | | | | | | | | |
|---|---|---|---|---|---|---|---|---|---|---|---|
| *1: Including the initiator and the molecular weight-controlling agent | | | | | | | | | | | |

### <Evaluation of test cloth>

An emulsion of the copolymer in each of Examples 1 to 22 was diluted with distilled water to adjust the solid content concentration to be 10 mass%, then, a trimethylolmelamine resin (BECKAMINE M-3, manufactured by DIC Corporation) as a thermosetting agent and an organic amine salt catalyst (Accelerator ACX, manufactured by DIC Corporation) as a thermosetting catalyst were added so that the respective concentrations became 0.3 mass%, and further, a blocked isocyanate (MEIKANATE TP-10, manufactured by Meisei Chemical Works, Ltd.) as a combination assisting agent was added so that the concentration became 0.6 mass%, thereby to obtain a water/oil repellent composition.

In the water/oil repellent composition, a dyed nylon cloth was dipped and squeezed so that the wet pickup became 42 mass%. This cloth was dried under the following heating condition A or B to obtain a test cloth. With respect to the test cloth, water repellency (water repellency after air drying), oil repellency and dynamic water repellency were evaluated. The results are shown in Table 5.

Heating condition A: drying at 110°C for 90 seconds, followed by drying at 170°C for 60 seconds.

Heating condition B: drying at 140°C for 90 seconds.

It is evident that Examples of the present invention are capable of imparting dynamic water repellency and at the same time have excellent effects for water repellency and oil repellency.

**TABLE 5**

| | | OR | | | WR | | | Bundesmann test | |
|---|---|---|---|---|---|---|---|---|---|
| Number of washing times | | 0 | 20 | 50 | 0 | 20 | 50 | 0 | 5 |
| Ex. | Heating condition | | | | | | | | |
| 1 | A | 6- | 2- | 2- | 5 | 5 | 4 | 5- | 3 |
| 2 | A | 5 | 3- | 2 | 5 | 4+ | 4 | 4+ | 3.5 |
| 3 | A | 6- | 3- | 2- | 5 | 5 | 5- | 5- | 4 |
| 4 | A | 6 | 3 | 2 | 5 | 4+ | 4 | 4- | 4 |
| | A | 5 | 2 | 2 | 5 | 4+ | 4+ | 5- | 4- |
| 5 | B | 5 | 2 | 2 | 5 | 4+ | 4 | 4.5 | 3+ |
| | A | 5 | 2 | 2- | 5 | 5- | 4- | 4 | 3+ |
| 6 | B | 5 | 2 | 2- | 5 | 5- | 3+ | 4 | 3 |
| 7 | A | 6 | 3 | 2 | 5 | 5- | 4+ | 4.5 | 3+ |
| 8 | A | 5- | 3 | 2 | 5 | 3+ | 4+ | 4 | 3 |
| 9 | A | 5 | 3- | 2 | 5 | 3+ | 3 | 4- | 3 |
| 10 | A | 6 | 2 | 2 | 5 | 4+ | 4+ | 4 | 3 |
| 11* | A | 6- | 5 | 4- | 5 | 4+ | 4 | 3.5 | 3- |
| 12* | A | 6- | 2 | 2 | 5 | 4+ | 4 | 3.5 | 2.5 |
| 13* | A | 6 | 1 | 1- | 5 | 4+ | 3+ | 4 | 2.5 |
| 14* | A | 5 | 2 | 2 | 5 | 4- | 3 | 3.5 | 2- |
| 15* | A | 4- | 4 | 2- | 5- | 4+ | 4- | 3- | 1+ |
| 16* | A | 4- | 0 | 0 | 5 | 5- | 5- | 4.5 | 4+ |
| 17* | A | 3 | 2 | 1- | 4+ | 3+ | 3+ | 3.5 | 2+ |
| 18* | A | 3 | 2 | 2 | 4+ | 3 | 3 | 3.5 | 2 |
| 19 | A | 6 | 3- | 2 | 5 | 5 | 5 | 5- | 5- |
| 20 | A | 6 | 1 | - | 5 | 3+ | - | 5 | 3 |
| 21 | A | 5 | 1 | - | 5 | 3+ | - | 5 | 3+ |
| 22 | A | 5 | 1 | - | 5 | 3+ | - | 5 | 3 |

| | | | | | | | | | |
|---|---|---|---|---|---|---|---|---|---|
| *not according to the invention | | | | | | | | | |

### INDUSTRIAL APPLICABILITY

The copolymer and the water/oil repellent composition of the present invention are useful as water/oil repellents for e.g. fiber products (clothing products (sports wears, coats, blousons, workwears, uniforms.), bags, industrial materials, .), nonwoven fabrics, leather products, stone materials, concrete building materials, Further, they are useful as coating agents for filtration materials, or as surface protecting agents. Further, they are useful for applications to impart water repellency, as mixed with polypropylene, nylon, followed by forming into fibers.

## Claims

1. A copolymer comprising structural units of the following monomer (a) and structural units of the following monomer (b), wherein the total of the content of structural units based on the monomer (a) and the content of structural units based on the monomer (b) is at least 85 mass% of all structural units (100 mass%), and the molar ratio ((a)/(b)) of the content of structural units based on the monomer (a) to the content of structural units based on the monomer (b) is from 0.12 to 3:
Momomer (a): a compound represented by the following formula (1):
(Z-Y)ₙ-X (1)
wherein Z is a C₁₋₆ polyfluoroalkyl group or a group represented by the following formula (2), Y is a bivalent organic group or a single bond, n is 1 or 2, and when n is 1, X is any one of groups represented by the following formulae (3-1) to (3-5) and when n is 2, X is any one of groups represented by the following formulae (4-1) to (4-4):
CᵢF₂ᵢ₊₁O(CFX¹CF₂O)ⱼCFX²- (2)
wherein i is an integer of from 1 to 6, j is an integer of from 0 to 10, and each of X¹ and X² is a fluorine atom or a trifluoromethyl group,
- CR=CH₂ (3-1)
- C(O)OCR=CH₂ (3-2)
- OC(O)CR=CH₂ (3-3)
- OCH₂-ϕ-CR=CH₂ (3-4)
- OCH=CH₂ (3-5)
wherein R is a hydrogen atom or a methyl group and ϕ is a phenylene group,
- CH[-(CH₂)ₘCR=CH₂]- (4-1)
- CH[-(CH₂)ₘC(O)OCR=CH₂]- (4-2)
- CH[-(CH₂)ₘOC(O)CR=CH₂]- (4-3)
- OC(O)CH=CHC(O)O- (4-4)
wherein R is a hydrogen atom or a methyl group and m is an integer of from 0 to 4,
Monomer (b): vinylidene chloride.

2. The copolymer according to Claim 1, wherein the monomer (a) is a compound represented by the formula (1) wherein Z is a C₄₋₆ perfluoroalkyl group.

3. The copolymer according to claim 1 or 2 which further has structural units based on the following monomer (c):
Monomer (c): a monomer having a cross-linkable functional group without having a polyfluoroalkyl group.

4. The copolymer according to any one of Claims 1 to 3, which does not have structural units based on the following monomer (d1):
Monomer (d1): a (meth)acrylate having an alkyl group having at least 18 carbon atoms.

5. The copolymer according to any one of Claims 1 to 4, wherein based on all monomers (100 mass%), structural units based on the monomer (a) are from 50 to 98.5 mass%, and structural units based on the monomer (b) are from 1 to 40 mass%.

6. A method for producing a copolymer, which comprises polymerizing a monomer mixture comprising the following monomer (a) and the following monomer (b) in a medium in the presence of a surfactant and a polymerization initiator, wherein the total of the content of the monomer (a) and the content of the monomer (b) is at least 85 mass% of the monomer mixture (100 mass%), and in the monomer mixture, the molar ratio ((a)/(b)) of the content of the monomer (a) to the content of the monomer (b) is from 0.12 to 3:
Momomer (a): a compound represented by the following formula (1):
(Z-Y)ₙ-X (1)
wherein Z is a C₁₋₆ polyfluoroalkyl group or a group represented by the following formula (2), Y is a bivalent organic group or a single bond, n is 1 or 2, and when n is 1, X is any one of groups represented by the following formulae (3-1) to (3-5) and when n is 2, X is any one of groups represented by the following formulae (4-1) to (4-4):
C¡F₂ᵢ₊₁O(CFX¹CF₂O)ⱼCFX²- (2)
wherein i is an integer of from 1 to 6, j is an integer of from 0 to 10, and each of X¹ and X² is a fluorine atom or a trifluoromethyl group,
- CR=CH₂ (3-1)
- C(O)OCR=CH₂ (3-2)
- OC(O)CR=CH₂ (3-3)
- OCH₂-ϕ-CR=CH₂ (3-4)
- OCH=CH₂ or (3-5)
wherein R is a hydrogen atom or a methyl group, and ϕ is a phenylene group,
- CH[-(CH₂)ₘCR=CH₂]- (4-1)
- CH[-(CH₂)ₘC(O)OCR=CH₂]- (4-2)
- CH[-(CH₂)ₘOC(O)CR=CH₂]- (4-3)
- OC(O)CH=CHC(O)O- (4-4)
wherein R is a hydrogen atom or a methyl group, and m is an integer of from 0 to 4,
Monomer (b): vinylidene chloride.

7. The method for producing a copolymer according to Claim 6, wherein the monomer (a) is a compound represented by the formula (1) wherein Z is a C₄₋₆ perfluoroalkyl group.

8. The method for producing a copolymer according to Claim 6 or 7, wherein the monomer mixture further contains the following monomer (c):
Monomer (c): a monomer having a cross-linkable functional group without having a polyfluoroalkyl group.

9. The method for producing a copolymer according to any one of Claims 6 to 8
wherein the monomer mixture does not contain the following monomer (d1):
Monomer (d1): a (meth)acrylate having an alkyl group having at least 18 carbon atoms.

10. The method for producing a copolymer according to anyone of Claims 6 to 9, wherein based on all monomers (100 mass%), structural units based on the monomer (a) are from 50 to 98.5 mass%, and structural units based on the monomer (b) are from 1 to 40 mass%.

11. A water/oil repellent composition comprising the copolymer as defined in any one of Claims 1 to 6 and a medium.

12. The water/oil repellent composition according to Claim 11, which contains a nonionic surfactant and a cationic surfactant.

## Patentansprüche

1. Copolymer, umfassend Struktureinheiten des folgenden Monomers (a) und Struktureinheiten des folgenden Monomers (b), wobei die Summe des Gehalts an Struktureinheiten, die auf Monomer (a) basieren, und des Gehalts an Struktureinheiten, die auf Monomer (b) basieren, mindestens 85 Massenprozent aller Struktureinheiten (100 Massenprozent) beträgt und das Stoffmengenverhältnis ((a)/(b)) des Gehalts an Struktureinheiten, die auf Monomer (a) basieren, zu dem Gehalt an Struktureinheiten, die auf Monomer (b) basieren, 0,12 bis 3 beträgt:
Monomer (a): eine Verbindung, dargestellt durch die folgende Formel (1):
(Z-Y)ₙ-X (1)
wobei Z eine C₁₋₆-Polyfluoralkylgruppe oder eine Gruppe, dargestellt durch die folgende Formel (2), ist, Y eine zweiwertige organische Gruppe oder eine Einfachbindung ist, n 1 oder 2 ist und, wenn n 1 ist, X eine beliebige der Gruppen, dargestellt durch die folgenden Formeln (3-1) bis (3-5), ist und, wenn n 2 ist, X eine beliebige der Gruppen, dargestellt durch die folgenden Formeln (4-1) bis (4-4), ist:
CᵢF₂ᵢ₊₁O(CFX¹CF₂O)ⱼCFX²- (2)
wobei i eine ganze Zahl von 1 bis 6 ist, j eine ganze Zahl von 0 bis 10 ist und jedes von X¹ und X² ein Fluoratom oder eine Trifluormethylgruppe ist,
-CR=CH₂ (3-1)
-C(O)OCR=CH₂ (3-2)
-OC(O)CR=CH₂ (3-3)
-OCH₂-ϕ-CR=CH₂ (3-4)
-OCH=CH₂ (3-5
wobei R ein Wasserstoffatom oder eine Methylgruppe ist und ϕ eine Phenylengruppe ist,
-CH[-(CH₂)ₘCR=CH₂]- (4-1)
-CH[-(CH₂)ₘC(O)OCR=CH₂]- (4-2)
-CH[-(CH₂)ₘOC(O)CR=CH₂]- (4-3)
-OC(O)CH=CHC(O)O- (4-4)
wobei R ein Wasserstoffatom oder eine Methylgruppe ist und m eine ganze Zahl von 0 bis 4 ist,
Monomer (b): Vinylidenchlorid.

2. Copolymer nach Anspruch 1, wobei das Monomer (a) eine Verbindung, dargestellt durch die Formel (1), ist, wobei Z eine C₄₋₆-Perfluoralkylgruppe ist.

3. Copolymer nach Anspruch 1 oder 2, welches weiter Struktureinheiten, die auf dem folgenden Monomer (c) basieren, aufweist:
Monomer (c): ein Monomer mit vernetzbarer funktioneller Gruppe und ohne Polyfluoralkylgruppe.

4. Copolymer nach einem der Ansprüche 1 bis 3, welches keine Struktureinheiten, die auf dem folgenden Monomer (d1) basieren, aufweist:
Monomer (d1): ein (Meth)acrylat mit einer Alkylgruppe mit mindestens 18 Kohlenstoffatomen.

5. Copolymer nach einem der Ansprüche 1 bis 4, wobei, bezogen auf alle Monomere (100 Massenprozent), Struktureinheiten, die auf Monomer (a) basieren, 50 bis 98,5 Massenprozent ausmachen und Struktureinheiten, die auf Monomer (b) basieren, 1 bis 40 Massenprozent ausmachen.

6. Verfahren zur Herstellung eines Copolymers, umfassend das Polymerisieren eines Monomergemischs, umfassend das folgende Monomer (a) und das folgende Monomer (b) in einem Medium in der Gegenwart eines grenzflächenaktiven Mittels und eines Polymerisationsinitiators, wobei die Summe des Gehalts an Monomer (a) und des Gehalts an Monomer (b) mindestens 85 Massenprozent des Monomergemischs (100 Massenprozent) beträgt und in dem Monomergemisch das Stoffmengenverhältnis ((a)/(b)) des Gehalts an Monomer (a) zu dem Gehalt an Monomer (b) 0,12 bis 3 beträgt:
Monomer (a): eine Verbindung, dargestellt durch die folgende Formel (1):
(Z-Y)ₙ-X (1)
wobei Z eine C₁₋₆-Polyfluoralkylgruppe oder eine Gruppe, dargestellt durch die folgende Formel (2), ist, Y eine zweiwertige organische Gruppe oder eine Einfachbindung ist, n 1 oder 2 ist und, wenn n 1 ist, X eine beliebige der Gruppen, dargestellt durch die folgenden Formeln (3-1) bis (3-5), ist und, wenn n 2 ist, X eine beliebige der Gruppen, dargestellt durch die folgenden Formeln (4-1) bis (4-4), ist:
CᵢF₂ᵢ₊₁O(CFX¹CF₂O)ⱼFX²- (2)
wobei i eine ganze Zahl von 1 bis 6 ist, j eine ganze Zahl von 0 bis 10 ist, und jedes von X¹ und X² ein Fluoratom oder eine Trifluormethylgruppe ist,
-CR=CH₂ (3-1)
-C(O)OCR=CH₂ (3-2)
-OC(O)CR=CH₂ (3-3)
-OCH₂-ϕ-CR=CH₂ (3-4)
-OCH=CH₂ (3-5)
wobei R ein Wasserstoffatom oder eine Methylgruppe ist und ϕ eine Phenylengruppe ist,
-CH[-(CH₂)ₘCR=CH₂]- (4-1)
-CH[-(CH₂)ₘC(O)OCR=CH₂]- (4-2)
-CH[-(CH₂)ₘOC(O)CR=CH₂]- (4-3)
-OC(O)CH=CHC(O)O- (4-4)
wobei R ein Wasserstoffatom oder eine Methylgruppe ist und m eine ganze Zahl von 0 bis 4 ist,
Monomer (b): Vinylidenchlorid.

7. Verfahren zur Herstellung eines Copolymers nach Anspruch 6, wobei das Monomer (a) eine Verbindung, dargestellt durch die Formel (1), ist, wobei Z eine C₄₋₆-Perfluoralkylgruppe ist.

8. Verfahren zur Herstellung eines Copolymers nach Anspruch 6 oder 7, wobei das Monomergemisch weiter das folgende Monomer (c) enthält:
Monomer (c): ein Monomer mit vernetzbarer funktioneller Gruppe und ohne Polyfluoralkylgruppe.

9. Verfahren zur Herstellung eines Copolymers nach einem der Ansprüche 6 bis 8, wobei das Monomergemisch das folgende Monomer (d1) nicht enthält:
Monomer (d1): ein (Meth)acrylat mit einer Alkylgruppe mit mindestens 18 Kohlenstoffatomen.

10. Verfahren zur Herstellung eines Copolymers nach einem der Ansprüche 6 bis 9, wobei, bezogen auf alle Monomere (100 Massenprozent), Struktureinheiten, die auf Monomer (a) basieren, 50 bis 98,5 Massenprozent ausmachen und Struktureinheiten, die auf Monomer (b) basieren, 1 bis 40 Massenprozent ausmachen.

11. Wasser-/ölabweisende Zusammensetzung, umfassend das Copolymer nach einem der Ansprüche 1 bis 5 und ein Medium.

12. Wasser-/ölabweisende Zusammensetzung nach Anspruch 11, welche ein nichtionisches grenzflächenaktives Mittel und ein kationisches grenzflächenaktives Mittel enthält.

## Revendications

1. Copolymère comprenant des motifs structurels du monomère (a) suivant et des motifs structurels du monomère (b) suivant, dans lequel le total de la teneur en motifs structurels à base du monomère (a) et de la teneur en motifs structurels à base du monomère (b) est d'au moins 85 % en masse de tous les motifs structurels (100 % en masse), et le rapport molaire ((a)/(b)) de la teneur en motifs structurels à base du monomère (a) sur la teneur en motifs structurels à base du monomère (b) est de 0,12 à 3 :
monomère (a) : un composé représenté par la formule (1) suivante :
(Z-Y)ₙ-X (1)
dans laquelle Z est un groupe polyfluoroalkyle en C₁ à C₆ ou un groupe représenté par la formule (2) suivante, Y est un groupe organique divalent ou une liaison simple, n vaut 1 ou 2, et, quand n vaut 1, X est l'un quelconque des groupes représentés par les formules (3-1) à (3-5) suivantes et, quand n vaut 2, X est l'un quelconque des groupes représentés par les formules (4-1) à (4-4) suivantes :
CiF₂ᵢ₊₁O (CFX¹CF₂O)ⱼCFX²- (2)
dans laquelle i est un entier de 1 à 6, j est un entier de 0 à 10, et chacun de X¹ et X² est un atome de fluor ou un groupe trifluorométhyle,
-CR=CH₂ (3-1)
-C(O)OCR=CH₂ (3-2)
-OC(O)CR=CH₂ (3-3)
-(OCH₂)-ϕ-CR=CH₂ (3-4)
-OCH=CH₂ (3-5)
dans lesquelles R est un atome d'hydrogène ou un groupe méthyle et ϕ est un groupe phénylène,
-CH [-(CH₂)ₘCR=CH₂] - (4-1)
-CH[-(CH₂)ₘC(O) OCR=CH₂] - (4-2)
-CH [- (CH₂)ₘOC (O) CR=CH₂] - (4-3)
-OC (O) CH=CHC (O) O- (4-4)
dans lesquelles R est un atome d'hydrogène ou un groupe méthyle et m est un entier de 0 à 4,
monomère (b) : chlorure de vinylidène.

2. Copolymère selon la revendication 1, dans lequel le monomère (a) est un composé représenté par la formule (1) dans laquelle Z est un groupe perfluoroalkyle en C₄ à C₆.

3. Copolymère selon la revendication 1 ou 2, qui a en outre des motifs structurels à base du monomère (c) suivant :
monomère (c) : un monomère comportant un groupe fonctionnel réticulable dépourvu de groupe polyfluoroalkyle.

4. Copolymère selon l'une quelconque des revendications 1 à 3, qui n'a pas de motifs structurels à base du monomère (d1) suivant :
monomère (d1) : un (méth)acrylate comportant un groupe alkyle comprenant au moins 18 atomes de carbone.

5. Copolymère selon l'une quelconque des revendications 1 à 4, dans lequel, sur la base de tous les monomères (100 % en masse), les motifs structurels basés sur le monomère (a) représentent de 50 à 98,5 % en masse, et les motifs structurels basés sur le monomère (b) représentent de 1 à 40 % en masse.

6. Procédé pour produire un copolymère, qui comprend la polymérisation d'un mélange de monomères comprenant le monomère (a) suivant et le monomère (b) suivant dans un milieu en présence d'un tensioactif et d'un amorceur de polymérisation, dans lequel le total de la teneur en le monomère (a) et de la teneur en le monomère (b) est d'au moins 85 % en masse du mélange de monomères (100 % en masse) et, dans le mélange de monomères, le rapport molaire ((a)/(b)) de la teneur en le monomère (a) sur la teneur en le monomère (b) est de 0,12 à 3 :
monomère (a) : un composé représenté par la formule (1) suivante :
(z-Y)ₙ-X (1)
dans laquelle Z est un groupe polyfluoroalkyle en C₁ à C₆ ou un groupe représenté par la formule (2) suivante, Y est un groupe organique divalent ou une liaison simple, n vaut 1 ou 2, et, quand n vaut 1, X est l'un quelconque des groupes représentés par les formules (3-1) à (3-5) suivantes et, quand n vaut 2, X est l'un quelconque des groupes représentés par les formules (4-1) à (4-4) suivantes :
CᵢF₂ᵢ₊₁O (CFX¹CF₂O) ⱼCFX²- (2)
dans laquelle i est un entier de 1 à 6, j est un entier de 0 à 10, et chacun de X¹ et X² est un atome de fluor ou un groupe trifluorométhyle,
-CR=CH₂ (3-1)
-C(O) OCR=CH₂ (3-2)
-OC(O)CR=CH₂ (3-3)
-(OCH₂) -ϕ-CR=CH₂ (3-4)
-OCH=CH₂ (3-5)
dans lesquelles R est un atome d'hydrogène ou un groupe méthyle et ϕ est un groupe phénylène,
-CH [- (CH₂)ₘCR=CH₂]- (4-1)
-CH[-(CH₂)ₘC(O)OCR=CH₂] - (4-2)
-CH [- (CH₂)ₘOC (O) CR=CH₂] - (4-3)
-OC(O)CH=CHC(O)O- (4-4)
dans lesquelles R est un atome d'hydrogène ou un groupe méthyle et m est un entier de 0 à 4,
monomère (b) : chlorure de vinylidène.

7. Procédé pour produire un copolymère selon la revendication 6, dans lequel le monomère (a) est un composé représenté par la formule (1) dans laquelle Z est un groupe perfluoroalkyle en C₄ à C₆.

8. Procédé pour produire un copolymère selon la revendication 6 ou 7, dans lequel le mélange de monomères contient en outre le monomère (c) suivant :
monomère (c) : un monomère comportant un groupe fonctionnel réticulable dépourvu de groupe polyfluoroalkyle.

9. Procédé pour produire un copolymère selon l'une quelconque des revendications 6 à 8, dans lequel le mélange de monomères ne contient pas le monomère (d1) suivant :
monomère (d1) : un (méth)acrylate comportant un groupe alkyle comprenant au moins 18 atomes de carbone.

10. Procédé pour produire un copolymère selon l'une quelconque des revendications 6 à 9, dans lequel, sur la base de tous les monomères (100 % en masse), les motifs structurels basés sur le monomère (a) représentent de 50 à 98,5 % en masse, et les motifs structurels basés sur le monomère (b) représentent de 1 à 40 % en masse.

11. Composition hydrofuge/oléofuge comprenant le copolymère tel que défini dans l'une quelconque des revendications 1 à 6 et un milieu.

12. Composition hydrofuge/oléofuge selon la revendication 11, qui contient un tensioactif non-ionique et un tensioactif cationique.
